(19) Europäisches Patentamt / European Patent Office / Office européen des brevets

(11) **EP 2 744 207 A1**

(12) **EUROPEAN PATENT APPLICATION**
published in accordance with Art. 153(4) EPC

(43) Date of publication:
**18.06.2014 Bulletin 2014/25**

(51) Int Cl.:
*H04N 13/04* (2006.01)

(21) Application number: **12840103.1**

(22) Date of filing: **13.09.2012**

(86) International application number:
**PCT/JP2012/073423**

(87) International publication number:
**WO 2013/054632 (18.04.2013 Gazette 2013/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2011 JP 2011225513**

(71) Applicant: **Sony Corporation
Tokyo 108-0075 (JP)**

(72) Inventor: **AKAO, Masato
Tokyo 108-0075 (JP)**

(74) Representative: **Ealey, Douglas Ralph
D Young & Co LLP
120 Holborn
London EC1N 2DY (GB)**

(54) **IMAGE PROCESSING DEVICE, IMAGE PROCESSING UNIT, AND PROGRAM**

(57)     Provided is an image processing device including a left perspective image input unit configured to input a left perspective image that is an image signal for a left eye to be applied to three-dimensional image display, a right perspective image input unit configured to input a right perspective image that is an image signal for a right eye to be applied to three-dimensional image display, a parallax estimation unit configured to generate parallax information from the left and right perspective images, a reliability computation unit configured to compute a reliability of the parallax information generated by the parallax estimation unit, and a virtual perspective image generation unit configured to generate a virtual perspective image including an image of a perspective other than perspectives of the input left and right perspective images by receiving inputs of the left perspective image, the right perspective image, the parallax information, and the reliability.

FIG. 1

**Description**

Technical Field

The present disclosure relates to an image processing device, an image processing method, and a program. Particularly, the present disclosure relates to an image processing device, an image processing method, a program for generating a multi-perspective image to be applied to three-dimensional (3D) image display.

Background Art

In three-dimensional (3D) image display processing, a glass-free 3D display device with which stereoscopic images can be perceived without wearing glasses has started to be put into practical use. The glass-free 3D display device has, for example, a lenticular sheet or a parallax barrier (parallax barrier) on a display surface and controls images seen by the left eye and the right eye according to viewing positions.
In other words, the control is performed such that the left eye observes a left perspective image that is an image observed in the left vision and the right eye observes a right perspective image that is an image observed in the right vision.
However, in the above method, a correct stereoscopic view can be acquired only in a limited viewing position from a display. Thus, when an observation position of a user is a position different from a prescribed position, reverse viewing in which an image for the right eye (right perspective image) is seen by the left eye and an image for the left eye (left perspective image) is seen by the right eye or crosstalk in which a left perspective image and a right perspective image are mixed occurs.
In order to solve these problems, a configuration in which not only standard left perspective images and right perspective images corresponding to one regular observation position but also images seen from a new perspective which is set not to bring about crosstalk when observed in another observation position are generated and displayed has been proposed.
Not only one pair of an original left perspective image and right perspective image but also images of other virtual perspectives are generated as multi-perspective images, a pair of an optimum left perspective image and right perspective image is set to be selected according to an observation position from the multi-perspective images according to an observation position, and thereby image display in which reverse viewing or crosstalk is suppressed is performed.
In other words, by enabling a pair of a left perspective image and a right perspective image that change according to observation positions of a user to be observed, the left perspective image and the right perspective image are set to be observed respectively by the left eye and the right eye of the observer according to the observation positions even when an observation position of the user is changed.
To be specific, based on two original perspective images input to a display device or an image processing device, in other words, two perspective images of a left perspective image (L image) and a right perspective image (R image) for 3D image display, a perspective image having a virtual perspective other than the two perspectives is generated. For example, multi-perspective images having ten different perspectives including the original L and R images are generated.
By causing two optimum images from the generated multi-perspective images for an observation position of a user from a display to be combined and observed, 3D images can be displayed and observed in various observation positions while crosstalk in which left perspective images and right perspective images are mixed is suppressed.
For example, Patent Literature 1 (JP 2006-115198A) discloses a technique in which an original left perspective image (L image) and right perspective image (R image) are input, parallax detection is executed from the two images, and then a plurality of virtual perspective images are generated based on the detected parallax information. To be specific, the technique in which parallax is detected from the two original 3D images of the input left perspective image (L image) and right perspective image (R image) and then a virtual perspective position different from that of the input L and R images is decided based on a crosstalk amount or a fusion parallax range is disclosed.
However, the process described in Patent Literature 1 is configured such that the quality of the generated virtual perspective images is not considered and the virtual perspective positions are decided with reference to the center of the left perspective image and the right perspective image. Thus, there is a possibility of the quality of the generated virtual perspective images deteriorating and resultantly a possibility of a display image being unsuitable for observation.
A virtual perspective position is closely related to image quality.
For example, if it is assumed that:

a perspective position of an input L image is 0.0; and
a perspective position of an input R image is 1.0,
there are the following features in the relationship between a newly generated image having a virtual perspective and image quality.

(Feature 1) In a virtual perspective position between 0.0 and 1.0 of between the L image (0.0) and the R image (1.0), a virtual perspective image in 0.5 that is the center position of the L and R images has the lowest image quality in comparison to other virtual perspective positions.

(Feature 2) In a virtual perspective position of 0.0 or lower that is further left than the L image or 1.0 or higher that is further right than the R image, quality of a video decreases as the video moves further away from the L image or the R image.

Such relationship between a virtual perspective position and image quality is attributable to, for example, accuracy of parallax detection, an amount of an occlusion region included in an image, or the like.

It should be noted that, since an original input left-eye image can be used in the perspective position of 0.0 and an original input right-eye image can be used in the perspective position of 1.0 as they are, the image quality reaches the maximum level.

In addition, Patent Literature 1 (JP 2006-115198A) proposes another technique in which a maximum parallax amount is detected from 3D images of an original input left perspective image (L image) and right perspective image (R image) and a virtual perspective position is decided so that the maximum parallax falls within the crosstalk amount or fusion parallax range. In other words, the technique in which a perspective interval of a virtual perspective image to be generated is decided according to the maximum parallax amount of the input L and R images is disclosed.

However, when the maximum parallax is detected from the original L and R images, an image of an image region that has the maximum parallax and ease in noticing the image region is not considered. Thus, for example, the following problems arise.

- Since the area of the image region that has the maximum parallax is not considered when the maximum parallax is detected, when an object with a small area has the maximum parallax, there is a possibility of a virtual perspective interval being unnecessarily narrowed according to presence of a maximum parallax image region that rarely affects vision.
- In addition, since ease in noticing the image region that has the maximum parallax is not considered when the maximum parallax is detected, when an image region that is not visually noticed has the maximum parallax, there is a case in which the virtual perspective interval is unnecessarily narrowed or widened according to the maximum parallax information of the image region that rarely affects vision.

Furthermore, Patent Literature 2 (JP 2006-126965A) discloses a configuration in which, using an original input left perspective image (L image) and right perspective image (R image), a filtering process is performed according to an estimated error during parallax compositing using the images.

However, according to Patent Literature 2, when a method of eliciting the estimated error is not clear at all and a reliability in the error estimation method is poor, there is a possibility of a failed composite image being generated even when the filtering process is applied.

Citation List

Patent Literature

Patent Literature 1:     JP 2006-115198A
Patent Literature 2:     JP 2006-126965A

Summary of Invention

Technical Problem

It is desirable to provide an image processing device, an image processing method, and a program that enable a process of generating a multi-perspective image with high quality to be performed based on a left perspective image (L image) and a right perspective image (R image) for a 3D image.

In addition, the present disclosure provides an image processing device, an image processing method, and a program that can generate a multi-perspective image with high quality by executing, for example, a parallax estimation process and computation of a reliability of a result of the estimation process and then executing parallax adjustment according to the computed reliability in a configuration in which a process of generating the multi-perspective image based on a left perspective image (L image) and a right perspective image (R image) for a 3D image is performed.

Solution to Problem

According to a first aspect of the present disclosure, there is provided an image processing device including a left perspective image input unit configured to input a left perspective image (L image) that is an image signal for a left eye to be applied to three-dimensional image display, a right perspective image input unit configured to input a right perspective image (R image) that is an image signal for a right eye to be applied to three-dimensional image display, a parallax estimation unit configured to generate parallax information from the left perspective image (L image) and the right perspective image (R image), a reliability computation unit configured to compute a reliability of the parallax information generated by the parallax estimation unit, and a virtual perspective image generation unit configured to generate a virtual perspective image including an image of a perspective other than perspectives of the input L and R images by receiving inputs of the left perspective image (L image), the right perspective image (R image), the parallax information, and the reliability. The virtual perspective image generation unit generates the virtual perspective image such that a parallax interval of the virtual perspective image to be generated is set to be wide when the reliability is high and set to be narrow when the reliability is low.

Further, according to an image processing device of an embodiment of the present disclosure, the reliability computation unit may compute a plurality pieces of reliability information through a plurality of different reliability computation processes, and then computes a final reliability through weighted addition of the plurality of pieces of computed reliability information.

Further, according to an image processing device of an embodiment of the present disclosure, the reliability computation unit may execute reliability computation according to an amount of a residual difference component obtained from computation of the difference between the input images and a parallax-compensated image generated from parallax compensation according to the parallax information estimated by the parallax estimation unit.

Further, according to an image processing device of an embodiment of the present disclosure, the reliability computation unit may change an aspect of the reliability computation according to a space activity in units of pixel regions of the left perspective image (L image) or the right perspective image (R image) in the reliability computation process according to the residual difference component.

Further, according to an image processing device of an embodiment of the present disclosure, the reliability computation unit may change an aspect of the reliability computation according to a dynamic range in units of pixel regions of the left perspective image (L image) or the right perspective image (R image) in the reliability computation process according to the residual difference component.

Further, according to an image processing device of embodiment of the present disclosure, the reliability computation unit may execute reliability computation according to a parallax difference of horizontally adjacent pixels of the parallax information estimated by the parallax estimation unit.

Further, according to an image processing device of embodiment of the present disclosure, the reliability computation unit may execute reliability computation according to a parallax difference of vertically adjacent pixels of the parallax information estimated by the parallax estimation unit.

Further, according to an image processing device of embodiment of the present disclosure, the reliability computation unit may execute reliability computation according to whether or not the parallax information estimated by the parallax estimation unit reaches a pre-set upper limit value or lower limit value.

Further, according to an image processing device of embodiment of the present disclosure, the reliability computation unit may execute reliability computation according to matching of the parallax information estimated by the parallax estimation unit based on the left perspective image (L image) input from the left perspective image (L image) input unit and the parallax information estimated by the parallax estimation unit based on the right perspective image (R image) input from the right perspective image (R image) input unit.

Further, according to an image processing device of embodiment of the present disclosure, the virtual perspective image generation unit may have a parallax adjustment section configured to decide a parallax position of the virtual perspective image such that a parallax interval of the virtual perspective image to be generated is set to be wide when the reliability is high and set to be narrow when the reliability is low according to the reliability computed by the reliability computation unit, and an image combining section configured to generate the virtual perspective image according to the parallax position decided by the parallax adjustment section.

Further, according to an image processing device of embodiment of the present disclosure, the virtual perspective image generation unit may have a reliability database in which correspondence information of the reliability and an optimum parallax amount is stored. The parallax adjustment section may acquire the optimum parallax amount according to the reliability input from the reliability computation unit by applying the correspondence information of the reliability and the optimum parallax amount stored in the reliability database, and then decides a virtual perspective image position according to the acquired parallax amount.

Further, according to an image processing device of embodiment of the present disclosure, with regard to the following two pieces of parallax information (a) and (b): (a) the parallax information estimated by the parallax estimation unit; and (b) LPF-applied parallax information configured to be a result of application of a low-pass filter (LPF) to a parallax map configured to express the parallax information as an image, the virtual perspective image generation unit further has a parallax information selection section configured to select the parallax information for a pixel with the high reliability and to select the LPF-applied parallax information for a pixel with the low reliability, and an image combining section configured to generate a virtual perspective image based on the parallax information selected by the parallax information selection section.

Further, according to an image processing device of embodiment of the present disclosure, with regard to the following two virtual perspective images (a) and (b): (a) a virtual perspective image generated by the image combining section; and (b) low-pass filter (LPF)-applied virtual perspective image configured to be a result of application of an LPF to the virtual perspective image generated by the image combining section, the virtual perspective image generation unit further has a virtual perspective image selection section configured to select the virtual perspective image for a pixel with the high reliability and to select the LPF-applied virtual perspective image for a pixel with the low reliability.

Further, according to a second aspect of the present disclosure, there is provided an image processing device including a left perspective image input unit configured to input a left perspective image (L image) that is an image signal for a left eye to be applied to three-dimensional image display, a right perspective image input unit configured to input a right perspective image (R image) that is an image signal for a right eye to be applied to three-dimensional image display, a first parallax estimation unit configured to generate parallax information from the left perspective image (L image) and the right perspective image (R image), a first reliability computation unit configured to compute a first reliability of the parallax information generated by the first parallax estimation unit, a resolution conversion unit configured to perform resolution conversion of the left perspective image (L image) and the right perspective image (R image), a second parallax estimation unit configured to perform estimation of parallax information based on a left perspective image (L image) and a right perspective image (R image) with low resolution output from the resolution conversion unit, a second reliability computation unit configured to compute a second reliability of second parallax information generated by the second parallax estimation unit, a resolution reverse conversion unit configured to perform reverse conversion to the resolution conversion, a reliability selection unit configured to select and output a higher reliability obtained by comparing the first reliability to the second reliability as a final reliability, and a virtual perspective image generation unit configured to generate a virtual perspective image including an image of a perspective other than perspectives of the input L and R images by receiving inputs of the left perspective image (L image), the right perspective image (R image), the parallax information, and the final reliability. The virtual perspective image generation unit generates the virtual perspective image such that a parallax interval of the virtual perspective image to be generated is set to be wide when the final reliability is high and set to be narrow when the final reliability is low.

Further, according to a third aspect of the present disclosure, there is provided an image processing method executed in an image processing device, including inputting, through an image input unit, a left perspective image (L image) that is an image signal for a left eye and a right perspective image (R image) that is an image signal for a right eye to be applied to three-dimensional image display, generating, by a parallax estimation unit, parallax information from the left perspective image (L image) and the right perspective image (R image), computing, by a reliability computation unit, a reliability of the parallax information generated by the parallax estimation unit, and executing, by a virtual perspective image generation unit, a virtual perspective image generation process for generating a virtual perspective image including an image of a perspective other than perspectives of the input L and R images by receiving inputs of the left perspective image (L image), the right perspective image (R image), the parallax information, and the reliability. The virtual perspective image generation unit generates the virtual perspective image such that a parallax interval of the virtual perspective image to be generated is set to be wide when the reliability is high and set to be narrow when the reliability is low.

Further, according to a fourth aspect of the present disclosure, there is provided a program for causing an image processing device to perform image processes including inputting a left perspective image (L image) that is an image signal for a left eye and a right perspective image (R image) that is an image signal for a right eye to be applied to three-dimensional image display through an image input unit, generating parallax information from the left perspective image (L image) and the right perspective image (R image) in a parallax estimation unit, computing a reliability of the parallax information generated by the parallax estimation unit in a reliability computation unit, and causing a virtual perspective image generation process to be executed in a virtual perspective image generation unit, the virtual perspective image generation process including generating a virtual perspective image including an image of a perspective other than perspectives of the input L and R images by receiving inputs of the left perspective image (L image), the right perspective image (R image), the parallax information, and the reliability. The virtual perspective image generation unit is caused to perform the process of generating the virtual perspective image such that a parallax interval of the virtual perspective image to be generated is set to be wide when the reliability is high and set to be narrow when the reliability is low.

Note that the program according to the present disclosure is a program that can be provided in a storage medium or communication medium that is provided in a computer-readable form for a general-purpose system that is capable of executing various types of program code, for example. Providing this sort of program in a computer-readable form makes it possible to implement the processing according to the program in the computer system.

The object, features, and advantages of the present disclosure will be made clear later by a more detailed explanation that is based on the embodiments of the present disclosure and the appended drawings. Furthermore, the system in this specification is not limited to being a configuration that logically aggregates a plurality of devices, all of which are contained within the same housing.

Advantageous Effects of Invention

According to a configuration of an embodiment of the present disclosure, a configuration in which an optimum multi-perspective image is generated as a three-dimensional image according to a reliability of an estimated parallax based on L and R images is realized.

To be specific, a left perspective image (L image) and a right perspective image (R image) to be applied to display of a three-dimensional image are input, parallax information is generated based on the left perspective image (L image) and the right perspective image (R image), and then a reliability of the generated parallax information is computed. For example, a plurality of different reliabilities are computed using a plurality of different analysis processes, and then the final reliability is computed using weighted addition of the plurality of computed reliabilities. A virtual perspective image generation aspect is changed according to the computed reliabilities. For example, a process of setting a parallax interval of the virtual perspective image to be wide when the reliability is high and to be narrow when the reliability is low is performed.

Through the process, an optimum multi-perspective image can be generated according to a reliability of estimated parallax.

Brief Description of Drawings

[FIG. 1] FIG. 1 is a diagram for describing a configuration example of an image processing device.
[FIG. 2] FIG. 2 is a diagram for describing a processing example of a parallax estimation unit.
[FIG. 3] FIG. 3 is a diagram for describing an example of a virtual perspective image generation process.
[FIG. 4] FIG. 4 is a diagram for describing an example of a virtual perspective image generation process.
[FIG. 5] FIG. 5 is a diagram for describing an example of a virtual perspective image generation process.
[FIG. 6] FIG. 6 is a diagram for describing a specific example of a reliability computation unit.
[FIG. 7] FIG. 7 is a diagram for describing a process executed by a first reliability computation section.
[FIG. 8] FIG. 8 is a diagram for describing a process executed by a first reliability computation section.
[FIG. 9] FIG. 9 is a diagram for describing a process executed by the first reliability computation section.
[FIG. 10] FIG. 10 is a diagram for describing a process executed by the first reliability computation section.
[FIG. 11] FIG. 11 is a diagram for describing a process executed by the first reliability computation section.
[FIG. 12] FIG. 12 is a diagram for describing a process executed by the first reliability computation section.
[FIG. 13] FIG. 13 is a diagram for describing a process executed by a first reliability computation section.
[FIG. 14] FIG. 14 is a diagram for describing a process executed by a second reliability computation section.
[FIG. 15] FIG. 15 is a diagram for describing a process executed by the second reliability computation section.
[FIG. 16] FIG. 16 is a diagram for describing a process executed by the second reliability computation section.
[FIG. 17] FIG. 17 is a diagram for describing a process executed by a third reliability computation section.
[FIG. 18] FIG. 18 is a diagram for describing a process executed by the third reliability computation section.
[FIG. 19] FIG. 19 is a diagram for describing a process executed by the third reliability computation section.
[FIG. 20] FIG. 20 is a diagram for describing a process executed by a fourth reliability computation section.
[FIG. 21] FIG. 21 is a diagram for describing a process executed by a fifth reliability computation section.
[FIG. 22] FIG. 22 is a diagram for describing an example of a specific process executed by a virtual perspective image generation unit.
[FIG. 23] FIG. 23 is a diagram for describing an example of a specific process executed by a virtual perspective image generation unit.
[FIG. 24] FIG. 24 is a diagram for describing an example of a specific process executed by a virtual perspective image generation unit.
[FIG. 25] FIG. 25 is a diagram for describing an example of a specific process executed by a virtual perspective image generation unit.
[FIG. 26] FIG. 26 is a diagram for describing an example of a specific process executed by a virtual perspective image generation unit.
[FIG. 27] FIG. 27 is a diagram for describing an example of a specific process executed by a virtual perspective image generation unit.
[FIG. 28] FIG. 28 is a diagram for describing a configuration example of another image processing device.

Description of Embodiments

Hereinafter, details of an image processing device, an image processing method, and a program according to the present disclosure will be described with reference to the drawings. Description will be provided in the following order.

1. Regarding an overview of an overall configuration and a process of an image processing device
2. Regarding a process of a parallax estimation unit
3. Regarding basic processes of generating virtual perspective images executed by a virtual perspective image generation unit based on input L and R images
4. Regarding a process of a reliability computation unit

4-1. Regarding a reliability computation process executed by a first reliability computation section

4-1-1. Reliability (R0) computation process example 1 based on a residual difference component
4-1-2. Reliability (R0) computation process example 2 based on a residual difference component

4-2. Regarding a reliability computation process executed by a second reliability computation section

4-3. Regarding a reliability computation process executed by a third reliability computation section

4-4. Regarding a reliability computation process executed by a fourth reliability computation section

4-5. Regarding a reliability computation process executed by a fifth reliability computation section

4-6. Regarding the final reliability computation process by the reliability computation unit

5. Regarding a process of the virtual perspective image generation unit

5-1. Configuration example of deciding a virtual perspective position according to reliability information input from the reliability computation unit
5-2. Configuration example of deciding a virtual perspective position according to information on the correspondence relationship between a reliability and an optimum parallax amount and reliability information input from the reliability computation unit
5-3. Regarding an example in which parallax information conversion to which an LPF is applied and a process of converting a virtual perspective image are included

6. Regarding an example in which resolution conversion is executed and parallax estimation is executed with application of a resolution-converted image
7. Conclusion of the configuration of the present disclosure

[1. Regarding an overview of an overall configuration and a process of an image processing device]

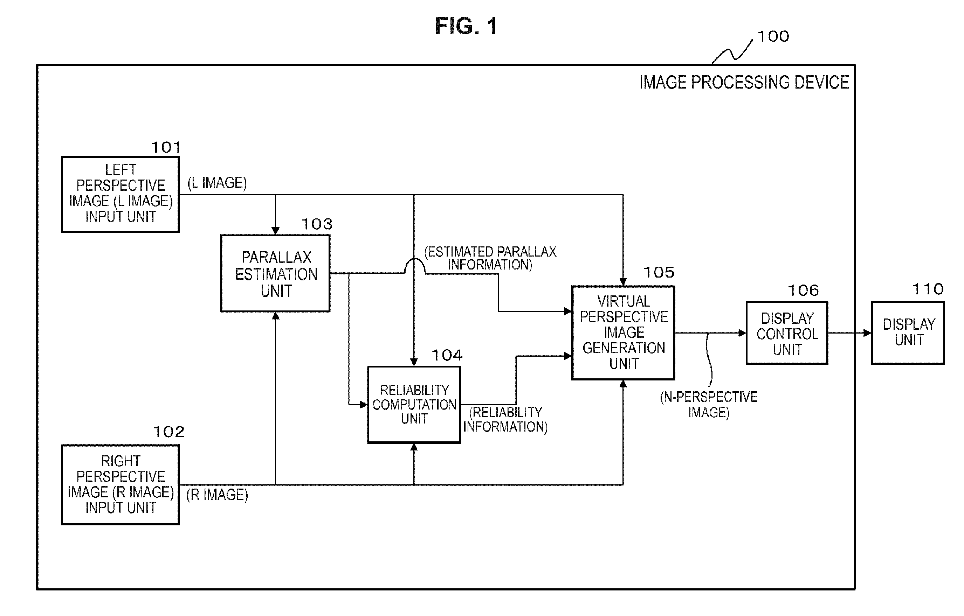

First, an overview of an overall configuration and a process of an image processing device will be described with reference to FIG. 1. Then, details of processes performed by constituent units will be described.
As shown in FIG. 1, the image processing device 100 has a left perspective image (L image) input unit 101, a right perspective image (R image) input unit 102, a parallax estimation unit 103, a reliability computation unit 104, a virtual perspective image generation unit 105, and a display control unit 106, and a generated image is output from the image processing device 100 to a display unit 110.
It should be noted that, in the configuration shown in FIG. 1, the display unit 110 is depicted as an external constituent element of the image processing device 100, however, the image processing device 100 may be configured to have the display unit 110 therein.
It should be noted that FIG. 1 shows a primary configuration of the image processing device, and in addition to the configuration shown in the drawing, the image processing device 100 has a control unit that has a program execution function such as a CPU that executes data process control, a storage unit that stores programs executed by the control unit and various parameters, and an input unit that inputs such parameters, image data, and the like.

The control unit executes a process that will be described below, for example, according to a program stored in the storage unit in advance.

The left perspective image (L image) input unit 101 and the right perspective image (R image) input unit 102 input a left perspective image (L image) and a right perspective image (R image) generated in advance for three-dimensional (3D) image display.

The left perspective image (L image) corresponds to an image observed by the left eye and the right perspective image (R image) corresponds to an image observed by the right eye.

However, the two images are two standard L and R images. In other words, in a glass-free 3D display device equipped with, for example, a lenticular sheet or a parallax barrier (parallax barrier) on its display face, the images are L and R images observed as correct 3D images when a display is observed from a prescribed position, for example, a front-center position.

When an observation position of a user is a position different from the prescribed position, reverse viewing in which an image for the right eye (right perspective image) is seen by the left eye and an image for the left eye (left perspective image) is seen by the right eye, or crosstalk in which a left perspective image and a right perspective image are mixed arises.

In order to solve these problems, the image processing device 100 generates images having new perspectives (virtual perspectives) that do not bring about crosstalk when observed from various observation positions based on input L and R images corresponding to one regular observation position, in other words, the standard left perspective image (L image) and right perspective image (R image).

The parallax estimation unit 103 inputs the left perspective image (L image) and the right perspective image (R image), thereby generating parallax information based on the images.

The parallax information is information corresponding to a deviation between images of the same subject included in the input L and R images (a pixel deviation in the right-left direction) and to a distance to the subject. To be specific, for example, data with parallax information (subject distance information) in units of pixels or units of pixel regions is generated.

The reliability computation unit 104 computes a reliability of the parallax information in units of pixels or units of pixel regions estimated by the parallax estimation unit 103 based on the input L and R images.

The virtual perspective image generation unit 105 generates virtual perspective images by receiving inputs of the information including:

the L image from the left perspective image (L image) input unit 101;
the R image from the right perspective image (R image) input unit 102;
the parallax information from the parallax estimation unit 103; and
the reliability information from the reliability computation unit 104.

The virtual perspective image generation unit 105 executes a process of deciding virtual perspective positions or the like according to the reliability information input from the reliability computation unit 104, thereby generating the virtual perspective images corresponding to the decided virtual perspective positions.

The virtual perspective image generation unit 105 executes a process of generating the virtual perspective images with reference to the reliability information input from the reliability computation unit 104. In other words, in addition to the two perspective images of the input L and R images, images having a total of N perspectives including images having perspectives other than the two perspectives are further generated and output. The virtual perspective image generation unit 105 generates the virtual perspective images by setting, for example, parallax intervals of the generated virtual perspective images to be wide when the reliability computed by the reliability computation unit 104 is high and to be narrow when the reliability is low. Details of the process will be described later.

The virtual perspective images generated by the virtual perspective image generation unit 105 are output to and displayed on the display unit 110 via the display control unit 106.

A display image generated by the image processing device of the present disclosure is a display image for a glass-free 3D display device by which a user can view stereoscopic images without wearing glasses.

The display unit 110 is a display unit that performs glass-free 3D display, and is a display unit that has, for example, a lenticular sheet or a parallax barrier (parallax barrier) on its display face and can control images seen by the left eye and the right eye according to viewing positions.

The display control unit 106 outputs the images having N perspectives generated by the virtual perspective image generation unit 105 to the display unit 110.

It should be noted that the display control unit 106 generates display information according to a display configuration of the display unit 110.

It should be noted that the image processing device 100 can also be configured as, for example, an imaging device such as a camera, a PC, or a display device such as a television having an imaging unit, and is set to be configured to have a function according to each device when the image processing device is configured as one of the above devices.

A camera, for example, is configured to have an imaging unit that photographs L and R images as images from different perspectives and to generate multi-perspective images using the L and R images input from the imaging unit.

[2. Regarding a process of the parallax estimation unit]

Next, a process of the parallax estimation unit 103 will be described.

The parallax estimation unit 103 receives an input of the left perspective image (L image) and the right perspective image (R image), and then generates the parallax information based on the images.

The parallax information is information corresponding to a deviation between images of a same subject (a pixel deviation in the right-left direction) included in the standard L and R images and to a distance to the subject. To be specific, for example, data with parallax information (subject distance information) in units of pixels is generated.

Acquisition of the parallax information is executed using, for example, existing methods as follows.

(a) A block matching-based parallax information acquisition process
(b) A DP (Dynamic Programming) matching-based parallax information acquisition process
(c) A segmentation-based parallax information acquisition process
(d) A learning-based parallax information acquisition process
(e) A parallax information acquisition process based on a combination of the above methods

The parallax information is acquired in, for example, any method of (a) to (e) described above.

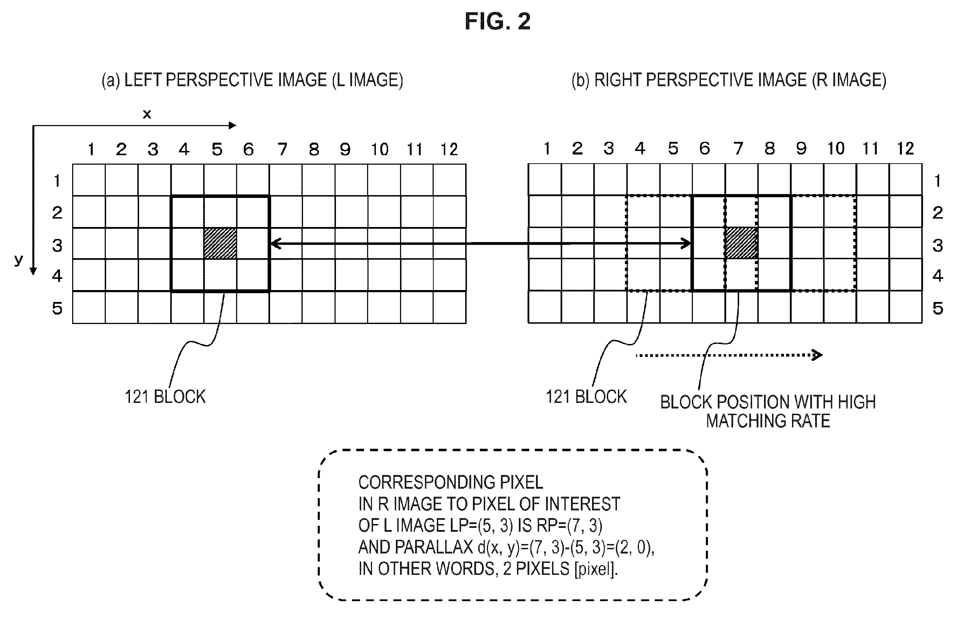

The block matching-based parallax information acquisition process will be briefly described with reference to FIG. 2.

As illustrated in FIG. 2, the input original standard images are:

(a) the left perspective image (L image); and
(b) the right perspective image (R image),

and, for example, a pixel region (block) 121 of the L image is selected using the input L and R images, and a block similar to the selected block is detected in the R image. In other words, blocks determined to be photographed regions of the same subject (matching blocks) are selected from the L and R images. Furthermore, a positional deviation between the matching blocks of the L and R images (the number of pixels in the horizontal direction, or the like) is measured.

In FIG. 2, for example, a pixel in the R image corresponding to a pixel of interest LP=(5, 3) of the pixel region (block) 121 of the L image is RP=(7,3).

In this case, parallax d(5, 3) between the L and R images of the pixel position (x, y)=(5, 3) of the L image is computed as follows.
Parallax d(5, 3)=(7, 3)-(5, 3)=(2, 0)

In other words, the parallax d of the pixel position (x, y)=(5, 3) of the L image is two pixels [pixel].

The positional deviation of a block changes according to a distance to a subject photographed in the block.

In other words, the positional deviation of the block corresponds to the subject distance, and information on the positional deviation is acquired as parallax information.

It should be noted that, as an expression form of the parallax information, for example, there is a depth map (a distance image or a parallax map). The depth map (parallax map) is, for example, an image in which parallax (subject distance) in units of pixels of the L image and the R image is expressed by luminance in units of pixels, and for example, a high luminance region indicates a close subject (close to a camera) and a low luminance region indicates a distant subject (distant from the camera). In other words, the depth map is an image in which a subject distance is expressed by luminance.

[3. Regarding basic processes of generating virtual perspective images executed by the virtual perspective image generation unit based on input L and R images]

Next, basic processes of generating virtual perspective images executed by the virtual perspective image generation unit 105 based on input L and R images will be described.

The virtual perspective image generation unit 105 generates virtual perspective images by receiving inputs of information including:

an L image from the left perspective image (L image) input unit 101;
an R image from the right perspective image (R image) input unit 102;

parallax information from the parallax estimation unit 103; and
reliability information from the reliability computation unit 104.

For example, a pre-set number of virtual perspectives (for example, ten) is decided, and virtual perspective images corresponding to each of the virtual perspectives are generated. The virtual perspective images are generated using the input standard L and R images. In other words, the virtual perspective images are generated using the left perspective image (L image) and the right perspective image (R image) that are input images.

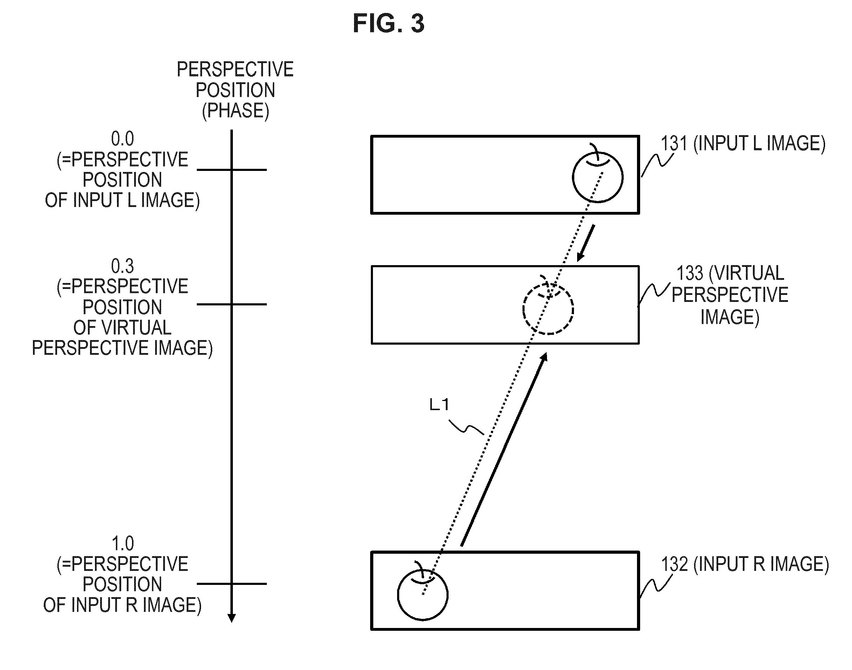

A specific process example of generating the virtual perspective images will be described with reference to FIG. 3 and succeeding drawings.

FIG. 3 shows an original left perspective image (L image) 131 and right perspective image (R image) 132 input to the image processing device and a virtual perspective image 133 based on the L and R images.

The left perspective image (L image) 131 is an image observed in a left eye perspective position from a standard position and the right perspective image (R image) 132 is an image observed in a right eye perspective position from the standard position.

It is assumed that the perspective position of the left perspective image (L image) 131 is 0.0 and the perspective position of the right perspective image (R image) 132 is 1.0.

FIG. 3 shows a process example when, for example, an observation image from the perspective position of 0.3 between 0.0 and 1.0 of the perspective positions is generated as the virtual perspective image 133.

A same subject (an apple) is photographed in different positions of each of the left perspective image (L image) 131 and the right perspective image (R image) 132. Since the L image and the R image have different perspective positions, the position of the same subject is different in the images.

When the virtual perspective image 103 having the perspective position of 0.3 between the perspective position of 0.0 and the perspective position of 1.0 is generated, the position of the subject (the apple) is set using linear interpolation. By changing the position of the subject along the straight line L1 shown in FIG. 3, the position of the subject in the virtual perspective image from each virtual perspective is decided and then the virtual perspective image can be generated.

As described above, the virtual perspective image of each virtual perspective position is generated through the linear interpolation process based on the input L and R images.

It should be noted that, when the virtual perspective image is to be generated, the virtual perspective image can be generated through a blending process using the two images of both input L and R images.

Alternatively, the virtual perspective image can be generated using only one image, such as using the L image only or the R image only, through a process of deviating the subject position according to virtual perspective positions.

Alternatively, a process of generating the virtual perspective image using the L image only in a virtual perspective position close to the L image and generating the virtual perspective image using the R image only in a position close to the R image may be performed.

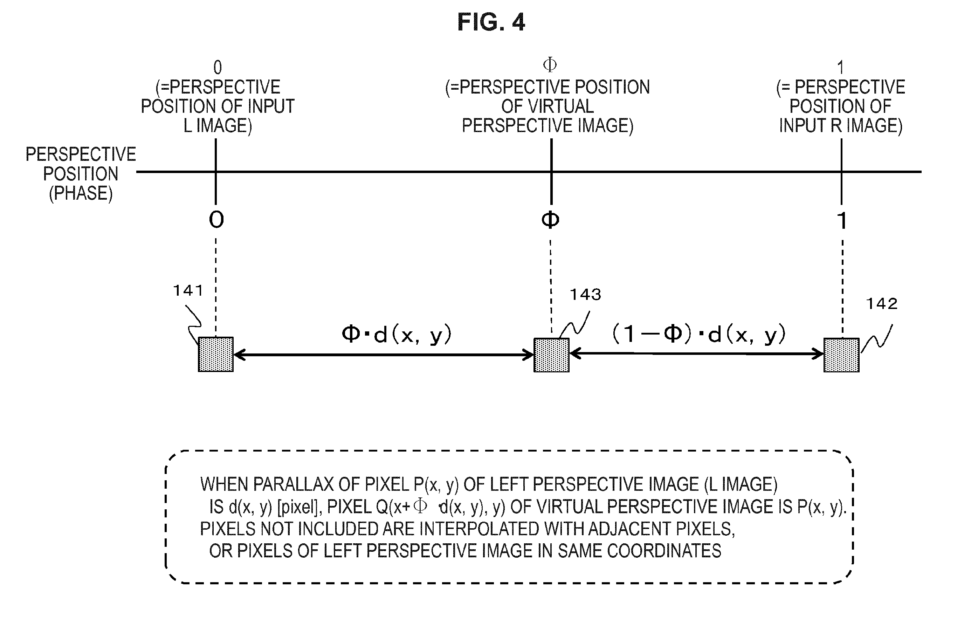

A process example of deciding a pixel value of the virtual perspective image 131 based on the process of blending the input L and R images will be described with reference to FIG. 4.

FIG. 4 shows:

a pixel P (x, y) 141 of the input left perspective image (L image) which is the perspective position of 0;
a corresponding pixel 142 to the pixel P of the L image in the input right perspective image (R image) which is the perspective position of 1; and
a corresponding pixel 143 of the pixel P of the L image in the virtual perspective image which is the perspective position of $\Phi$.

It should be noted that $\Phi=0$ to 1.

When parallax of the pixel P (x, y) 141 of the input left perspective image (L image) is d(x, y) [pixel], the pixel position of the corresponding pixel 143 to the pixel P (x, y) of the L image in the virtual perspective image is assumed to be a pixel Q(x+$\Phi$·d(x, y), y).

In other words, the pixel value of the pixel Q (x+$\Phi$·d(x, y), y) in the virtual perspective image is set to be the pixel value of the pixel P (x, y) 141 of the left perspective image (L image).

The pixel value of each pixel of the virtual perspective image is set based on the parallax information of a pixel of the left perspective image (L image) as described above.

It should be noted that the pixel values of pixels that are not included in the virtual perspective image in the process are decided using a process of applying the right perspective image (R image), an interpolation process using the pixel values of adjacent pixels, a process of being interpolated with pixels of the left perspective image in the same coordinates, or the like.

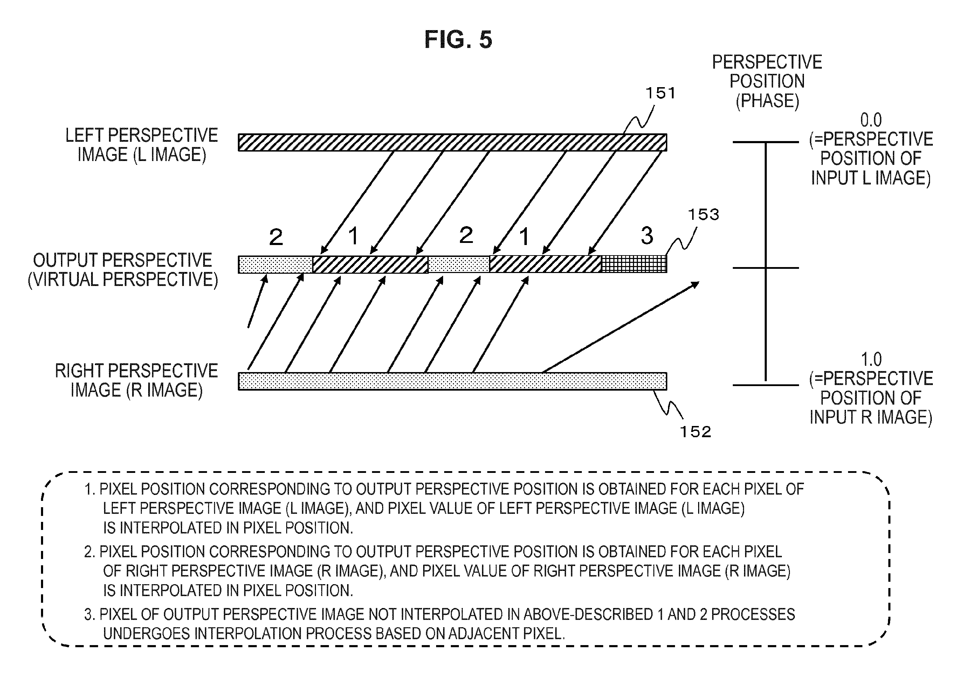

FIG. 5 shows:

a horizontal line 151 of the left perspective image (L image);
a horizontal line 152 of the right perspective image (R image); and
a horizontal line 153 of the virtual perspective image.

The arrows shown in the drawing are lines connecting pixel positions in the left perspective image (L image) and pixel positions in the right perspective image (R image) that can be applied to deciding pixel values of the horizontal line 153 of the virtual perspective image.

In the horizontal line 153 of the virtual perspective image shown in FIG. 5:

1 indicates a region set with a pixel value based on a constituent pixel value of the horizontal line 151 of the left perspective image (L image);
2 indicates a region set with a pixel value based on a constituent pixel value of the horizontal line 153 of the right perspective image (R image); and
3 indicates another region.

As described above, setting of the pixel value of the virtual perspective image is executed through, for example, the following three processes.

1. Pixel positions corresponding to output perspective positions are obtained with respect to each pixel of the left perspective image (L image) and the pixel positions are interpolated with the pixel values of the left perspective image (L image).
2. Pixel positions corresponding to the output perspective positions are obtained with respect to each pixel of the right perspective image (R image) and the pixel positions are interpolated with the pixel values of the right perspective image (R image).
3. Pixels of an output perspective image that are not interpolated in either of the processes 1 and 2 described above are subject to an interpolation process based on adjacent pixels.

It should be noted that the processes described with reference to FIGS. 4 and 5 are basic processes for generating images from virtual perspectives different from the L and R images based on the input L and R images.

The virtual perspective image generation unit 105 of the image processing device according to the present disclosure is based on the basic processes, and generates a final virtual perspective image by further applying reliability information input from the reliability computation unit 104 and then deciding a virtual perspective position or the like generated based on the reliability information.

This process will be described later in detail.

[4. Regarding a process of the reliability computation unit]

Next, a process executed by the reliability computation unit 104 will be described.

The reliability computation unit 104 computes a reliability of the parallax information in units of pixels or in units of pixel regions estimated by the parallax estimation unit 103 based on the input L and R images.

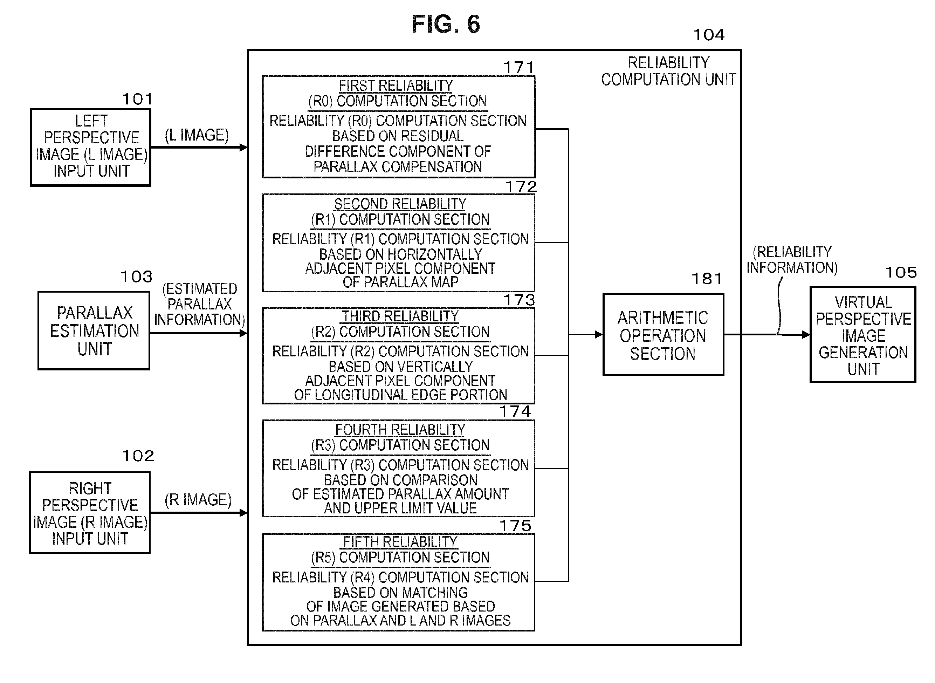

As shown in FIG. 6, the reliability computation unit 104 receives inputs of:

the left perspective image (L image) from the left perspective image (L image) input unit 101;
the right perspective image (R image) from the right perspective image (R image) input unit 102; and
the estimated parallax information from the parallax estimation unit 103.

The reliability computation unit 104 computes a plurality of reliabilities (R0 to R4) through a plurality of different processes based on the input information in first to fifth reliability computation sections 171 to 175, computes the final reliability information of the estimated parallax information by applying the plurality of reliabilities (R0 to R4) in an arithmetic operation section 181, and then outputs the reliability information to the virtual perspective image generation unit 105.

The arithmetic operation section 181 computes the weighted sum (R) using the following expression in which pre-set weight coefficients of $\alpha 0$, $\alpha 1$, $\alpha 2$, $\alpha 3$, and $\alpha 4$ are applied to the reliabilities R0, R1, R2, R3, and R4 that are computed in the first to fifth reliability computation sections 171 to 175, and outputs the computed value to the virtual perspective image generation unit 105 as the final reliability information.

$$R = \alpha 0 \cdot R0 + \alpha 1 \cdot R1 + \alpha 2 \cdot R2 + \alpha 3 \cdot R3 + \alpha 4 \cdot R4$$

It should be noted that, although FIG. 6 shows the five kinds of reliability computation sections of the first to fifth reliability computation sections 171 to 175, a configuration using one or more of the reliability computation sections rather than all five of the sections may also be possible. Alternatively, it is also possible to have a configuration in which another kind of reliability is applied.

Hereinafter, a reliability computation process executed by the first to fifth reliability computation sections 171 to 175 shown in FIG. 6 will be described in detail.

(4-1. Regarding a reliability computation process executed by the first reliability computation section)

The first reliability computation section 171 computes the reliability (R0) based on a residual difference component of parallax compensation.

In other words, a parallax-compensated image is generated by applying the estimated parallax information in units of pixels input from the parallax estimation unit 103, and based on pixel values included in the parallax-compensated image, a reliability of the estimated parallax information generated by the parallax estimation unit 103 is determined.

A plurality of process examples relating to a reliability (R0) computation process example based on the residual difference component of the parallax compensation will be described.

(4-1-1. Reliability (R0) computation process example 1 based on a residual difference component)

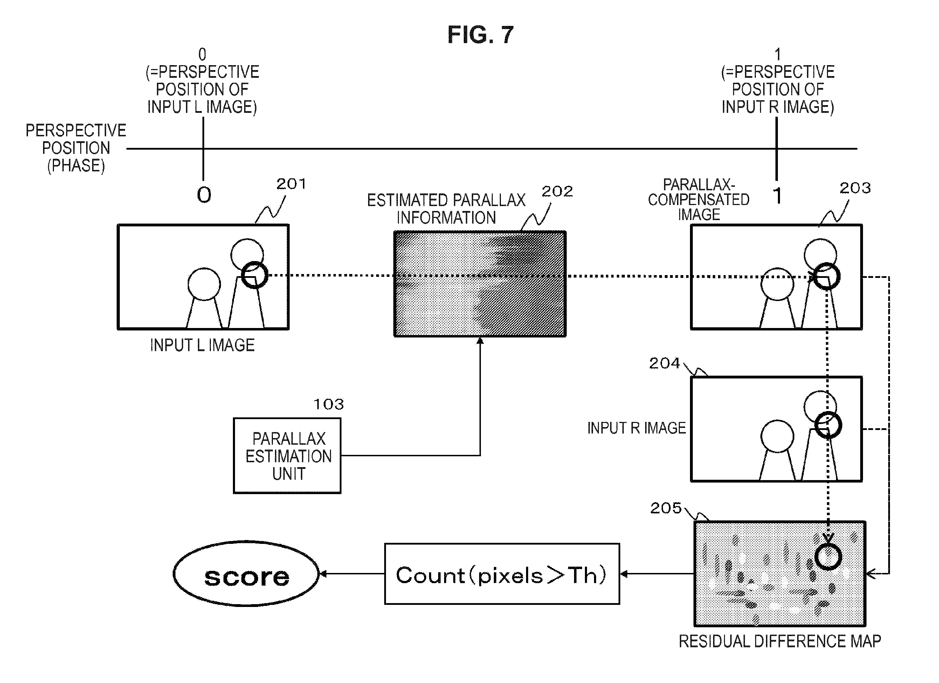

FIG. 7 is a diagram for describing the reliability (R0) computation process example 1 based on the residual difference component executed by the first reliability computation section 171.

The first reliability computation section 171 first applies estimated parallax information 202 in units of pixels input from the parallax estimation unit 103 to an L image 201 input from the left perspective image (L image) input unit 101 to generate a parallax-compensated image 203.

The estimated parallax information 202 is also called, for example, a parallax map, and is image data in which the parallax information generated by the parallax estimation unit 103 is expressed by luminance. The parallax map is an image in which parallax (subject distance) is expressed by luminance in units of pixels, and for example, a high luminance region indicates a close subject (close to the camera) and a low luminance region indicates a distant subject (distant from the camera). In other words, the parallax map is an image in which a subject distance is expressed by luminance.

The parallax-compensated image 203 is a virtual perspective image generated by applying the estimated parallax information 202 in units of pixels input from the parallax estimation unit 103 to the L image 201. However, the virtual perspective thereof is a perspective position corresponding to the perspective position (the phase of 1) of an R image input from the right perspective image (R image) input unit 102.

The parallax-compensated image 203 generated by applying the estimated parallax information 202 coincides with the R image input from the right perspective image (R image) input unit 102 if the estimated parallax information 202 in units of pixels generated by the parallax estimation unit 103 is correct.

However, actually, the estimated parallax information 202 generated by the parallax estimation unit 103 includes an estimation error or the like, and thus there is a difference between the parallax-compensated image 203 generated based on the L image 201 and the input R image 204 input from the right perspective image (R image) input unit 102.

A map obtained by computing differences in pixel values in units of corresponding pixels between the parallax-compensated image 203 and the input R image 204, i.e., a residual difference map 205 is generated. The residual difference map 205 shown in the drawing is a map in which the differences in the pixel values in units of the corresponding pixels between the parallax-compensated image 203 and the input R image 204 are expressed by grayscale information. For example, the differences are greater in darker portions.

Based on the residual difference map 205, residual differences that are the differences in units of pixels are compared to a pre-set threshold value (Th), and the number of pixels having residual differences greater than the threshold value (Th) is counted. By setting the count value to be N, the reliability R0 of the estimated parallax information generated by the parallax estimation unit 103 is decided according to the value of N.

In other words, when the number of pixels N having residual differences greater than the threshold value (Th) is large, the reliability R0 of the estimated parallax information generated by the parallax estimation unit 103 is low.

On the other hand, when the number of pixels N having residual differences greater than the threshold value (Th) is small, the reliability R0 of the estimated parallax information generated by the parallax estimation unit 103 is determined to be high.

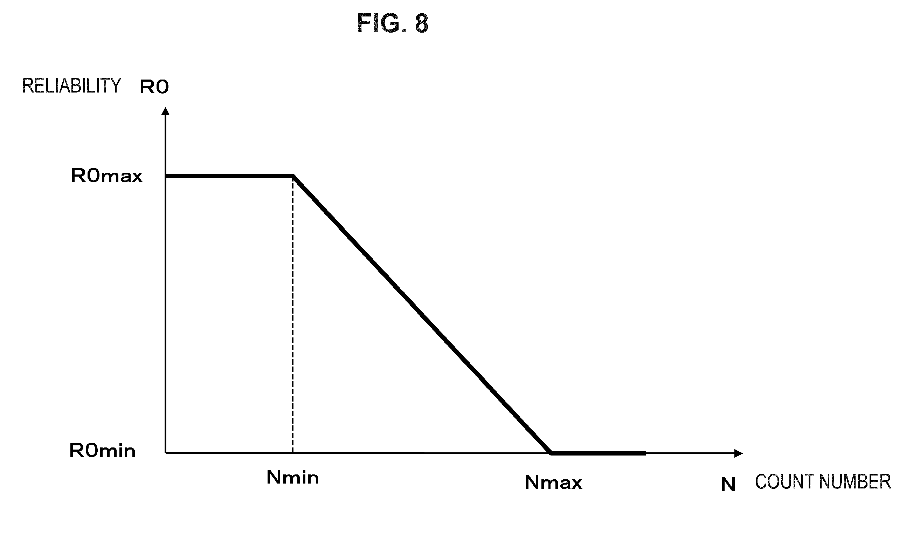

The correspondence relationship between the number of pixels N having residual differences greater than the threshold value (Th) and the reliability R0 of the estimated parallax information generated by the parallax estimation unit 103 is, to be specific, defined as the correspondence relationship as shown in, for example, FIG. 8.

In other words, the first reliability computation section 171 computes the value of the reliability R0 of the estimated parallax information generated by the parallax estimation unit 103 according to the value of the number of pixels N having residual differences greater than the threshold value (Th) as follows.

0≤N≤Mmin: Reliability R0=R0max

Nmin≤N≤Nmax: Reliability R0=R0max~R0min

Nmax≤N: Reliability R0=R0min

It should be noted that, for the values of Nmin, Nmax, R0min, and R0max, values set in advance are used.

In addition, in the range of Nmin≤N≤Nmax, the reliability R0 rectilinearly changes between R0max and R0min.

It should be noted that, although a process example in which the parallax-compensated image having the L image as a reference is generated based on the L image has been described in the above-described process example, a process of replacing the L image with the R image may also be performed in the above-described process. In other words, the process may be configured to be performed by generating a parallax-compensated image having the R image as a reference based on the R image.

It should be noted that, although all of the following process examples will be described to be performed with the L image as a reference, the processes may be configured to be performed by switching the L and R images.

(4-1-2. Reliability (R0) computation process example 2 based on a residual difference component)

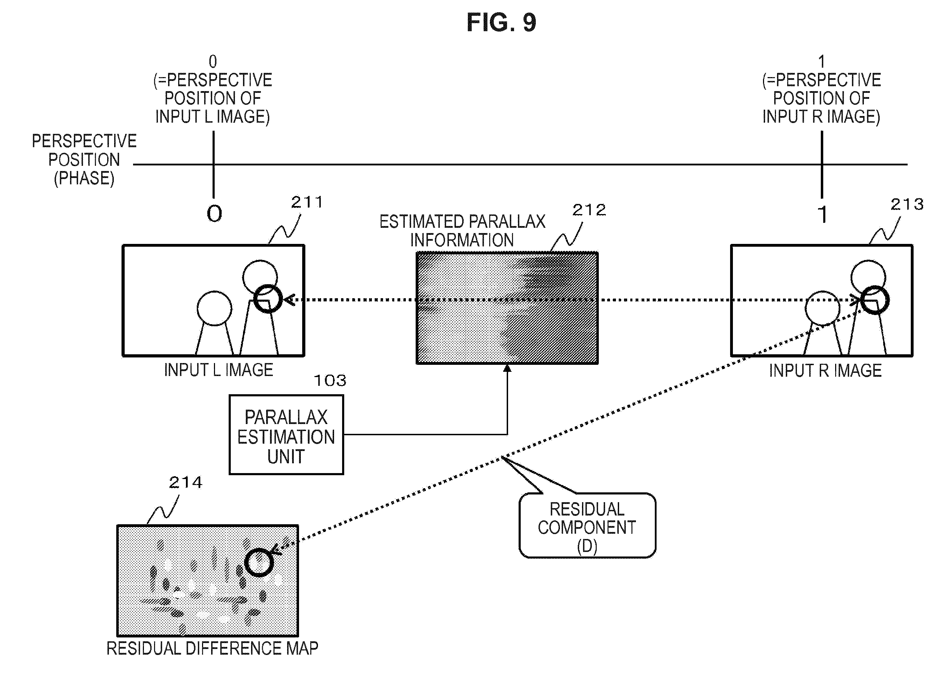

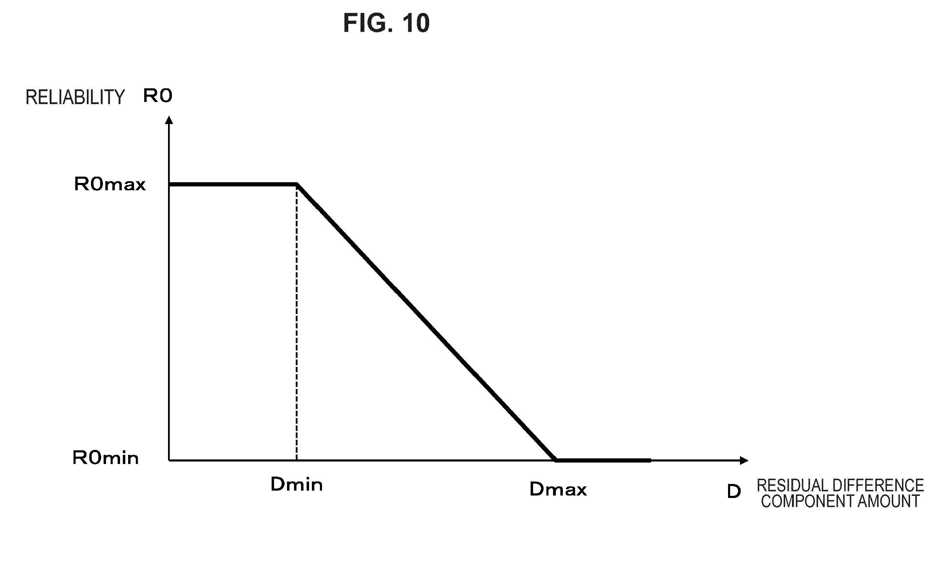

Next, a reliability (R0) computation process example 2 based on a residual difference component executed by the first reliability computation section 171 will be described with reference to FIGS. 9 and 10.

In this process example 2, by applying the estimated parallax information in units of pixels input from the parallax estimation unit 103 to an L image that is an input image, pixel positions of an input R image for which a distance corresponding to parallax is shifted are obtained as corresponding pixel positions.

Differences of pixels of the L image and pixel values of the corresponding pixel positions of the R image obtained in the above-described process are computed as residual differences D.

Based on the addition value of the residual differences D of all images, a reliability of the estimated parallax information generated by the parallax estimation unit 103 is determined.

FIG. 9 is a diagram for describing the reliability (R0) computation process example 2 based on a residual difference component executed by the first reliability computation section 171.

The first reliability computation section 171 first acquires parallax information corresponding to each pixel of the L image 211 input from the left perspective image (L image) input unit 101 based on the estimated parallax information 212 generated by the parallax estimation unit 103.

Here, parallax is assumed to be present only in the horizontal direction (X direction).

Parallax of a pixel (x, y) of the L image 211 is set to be, for example, d(x). d(x) is expressed as the number of pixels corresponding to parallax, for example, 2 pixels (2 pixels) or the like.

The first reliability computation section 171 decides corresponding pixel positions of the R image 213 input from the right perspective image (R image) input unit 102 based on the parallax d(x) of the pixel (x, y) of the L image 211. In other words, a distance corresponding to the parallax d(x) from a pixel position (x, y) of the R image 213 the same as the pixel (x, y) of the L image 211 and a position after moving in the horizontal direction are set as the corresponding pixel positions.

If the estimated parallax information of the parallax estimation unit 103 has a correct value, the pixel values of the corresponding pixel positions in the R image 213 have the same pixel values as the pixel (x, y) of the L image 211.

However, if the estimated parallax information of the parallax estimation unit 103 has an incorrect value, the pixel values of the corresponding pixel positions in the R image 213 are highly likely to have different pixel values from the pixel (x, y) of the L image 211.

The differences in the pixel values of the corresponding pixels of the L image 211 and the R image 213 are computed as residual difference components (D). For example, a residual difference map 214 in which the residual difference components of the entire images are expressed by grayscale information is generated.

The residual difference map 214 shown in the drawing is a map in which the differences (residual differences) in the pixel values of the corresponding pixels of the L image 211 and the R image 213 are expressed by grayscale information. For example, the differences are greater in darker portions.

The value obtained by adding the differences (residual differences) in units of pixels expressed in the residual difference map 214 of the all images is computed as a residual difference component amount D.

According to the value of the residual difference component amount D, the reliability R0 of the estimated parallax information generated by the parallax estimation unit 103 is decided.

In other words, when the residual difference component amount D is large, the reliability R0 of the estimated parallax information generated by the parallax estimation unit 103 is low.

On the other hand, when the residual difference component amount D is small, the reliability R0 of the estimated parallax information generated by the parallax estimation unit 103 is determined to be high.

The correspondence relationship between the residual difference component amount D and the reliability R0 of the estimated parallax information generated by the parallax estimation unit 103 is specifically defined as the correspondence relationship as shown in, for example, FIG. 10.

In other words, the first reliability computation section 171 computes the value of the reliability R0 of the estimated parallax information generated by the parallax estimation unit 103 according to the value of the residual difference component amount D as follows.

$0 \leq D \leq Dmin$: Reliability R0=R0max
$Dmin \leq D \leq Dmax$: Reliability R0=R0max~R0min
$Dmax \leq D$: Reliability R0=R0min

It should be noted that, for the values of Dmin, Dmax, R0min, and R0max, values set in advance are used.

In addition, in the range of $Dmin \leq D \leq Dmax$, the reliability R0 rectilinearly changes between R0max and R0min.

It should be noted that, although the processes described with reference to FIGS. 7 to 10 are for performing the reliability computation process of estimated parallax based on the residual difference components to which the estimated parallax information in units of pixels input from the parallax estimation unit 103 is applied, when a virtual perspective image that has an error of the estimated parallax, in other words, that has a left residual difference component, is generated, for example, there are cases in which the residual difference components stand out or have little influence according to a characteristic (feature) of each region of an image, and thus when a reliability is determined based on residual difference components, it may be possible to set different processes to be performed according to the characteristic (feature) of each region of the image.

To be specific, when a virtual perspective image with a remaining residual difference component is generated, for example, in a texture region, the residual difference component, i.e., a deviation of estimated parallax, greatly affects the image, and accordingly, an error is conspicuous when the image is observed.

On the other hand, in a flat region, the residual difference component, i.e., a deviation of estimated parallax, affects the image little, and accordingly, an error is rarely conspicuous when the image is observed.

Considering the above circumstances, it may be possible to set to detect the characteristic (feature) of the region of the image, and to adaptively change a method of extracting the residual difference component according to the detected characteristic in units of image regions.

As a feature value of an image region, for example, feature values to be detected are:

a space activity; and
a dynamic range.

In addition, according to the above-described feature values in units of image regions, a reliability computed according to the residual difference component is adaptively changed. To be specific, for example, a process of changing various parameters used in the reliability computation processes previously described with reference to FIGS. 8 and 10 is performed according to the feature values in units of image regions, the parameters including:

the following parameters shown in the graph of FIG. 8 including:

Nmin, Nmax; and
R0min, R0max;

the following parameters shown in the graph of FIG. 10 including:

Dmin, Dmax; and
R0min, R0max; or
the threshold value (Th) shown in FIG. 7.

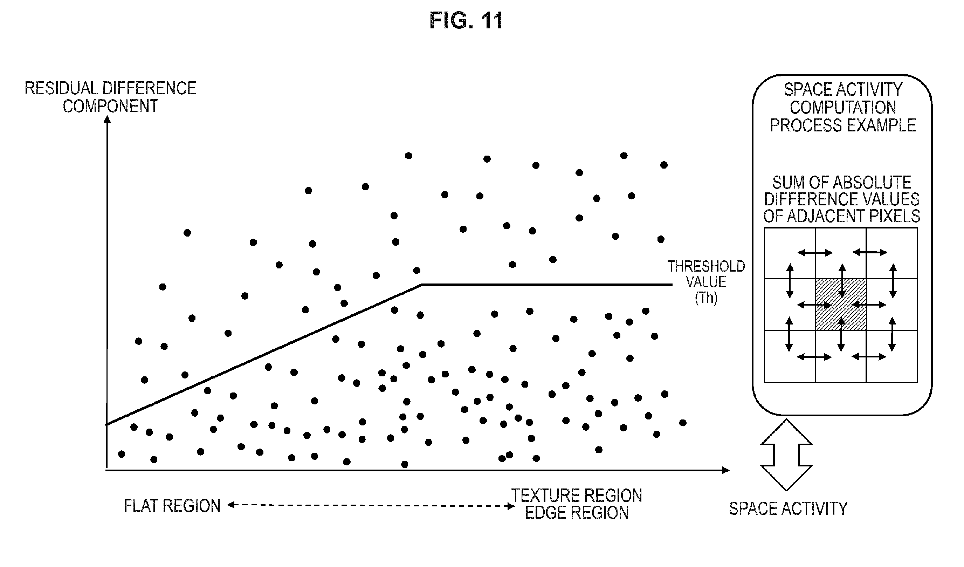

A specific example will be described with reference to FIG. 11.

FIG. 11 is a graph showing an example in which space activities are detected as feature values in units of pixels for an image, for example, an input L image, the threshold value (Th) shown in FIG. 7 is changed according to the values of the space activities, and a count value (N) serving as an index of a residual difference component is set to be changed.

It should be noted that the space activities are computed as the sum of the absolute values of the differences between pixel values of adjacent pixels in a pixel region (for example, having 3x3 pixels) having a pixel of interest at the center as shown in, for example, FIG. 11 (a space activity computation process example).

A region having a high value of the sum of the absolute values of the differences between the pixel values can be determined to be a texture region (edge region), and a region having a low value thereof can be determined to be a flat region.

In the graph shown in FIG. 11, the horizontal axis represents space activities and the vertical axis represents residual difference components, and each point corresponds to the value of a space activity and a residual difference component of a pixel.

Here, the threshold value (Th) described with reference to FIG. 7, i.e., the threshold value (Th) that defines whether or not to include a count value of the count number N to be determined as presence of a residual difference, is changed according to space activities of an image region as shown in the drawing.

With the setting described above, a reliability is computed according to characteristics of each region of an image.

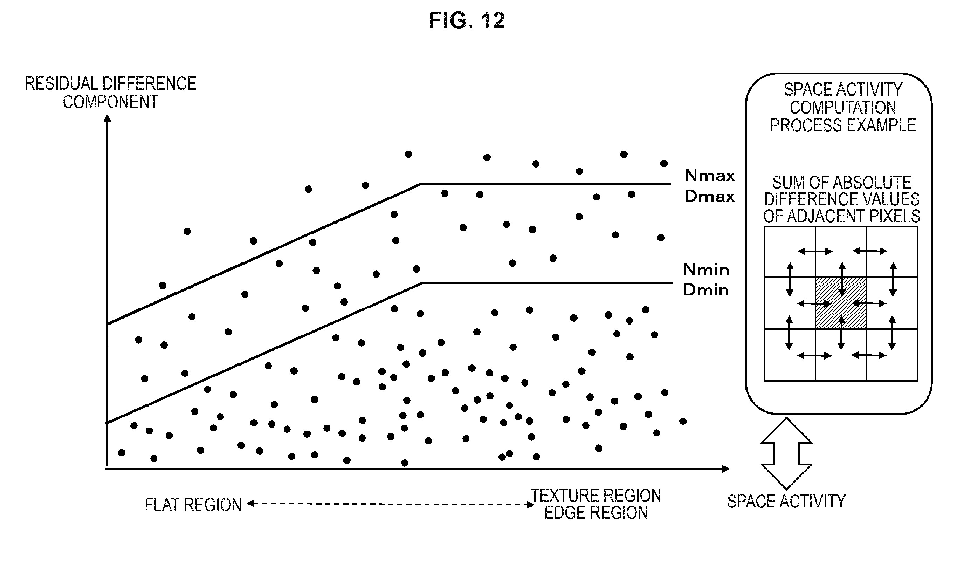

FIG. 12 shows a process example different from FIG. 11.

Space activities are detected as feature values in units of pixels in an image, for example, an input L image, in the same manner as in FIG. 11.

In the example shown in FIG. 12, a reliability computation process based on residual differences is changed by changing the parameters shown in FIGS. 8 and 10 according to the values of the space activities, the parameters including:

Nmin, Nmax; and
Dmin, Dmax.

In the graph shown in FIG. 12, the horizontal axis represents space activities and the vertical axis represents residual difference components, and each point corresponds to the value of a space activity and a residual difference component of each pixel as in FIG. 11

Here, the parameters shown in FIGS. 8 and 10 are changed according to the space activities of an image region as shown in the drawing, the parameters including:

Nmin, Nmax; and
Dmin, Dmax.

With the setting described above, a reliability is computed according to characteristics of each region of an image.

The process examples described with reference to FIGS. 11 and 12 are process examples in which a space activity is applied as a feature value of an image region.

As a feature value of an image region, a dynamic range may also be applied.

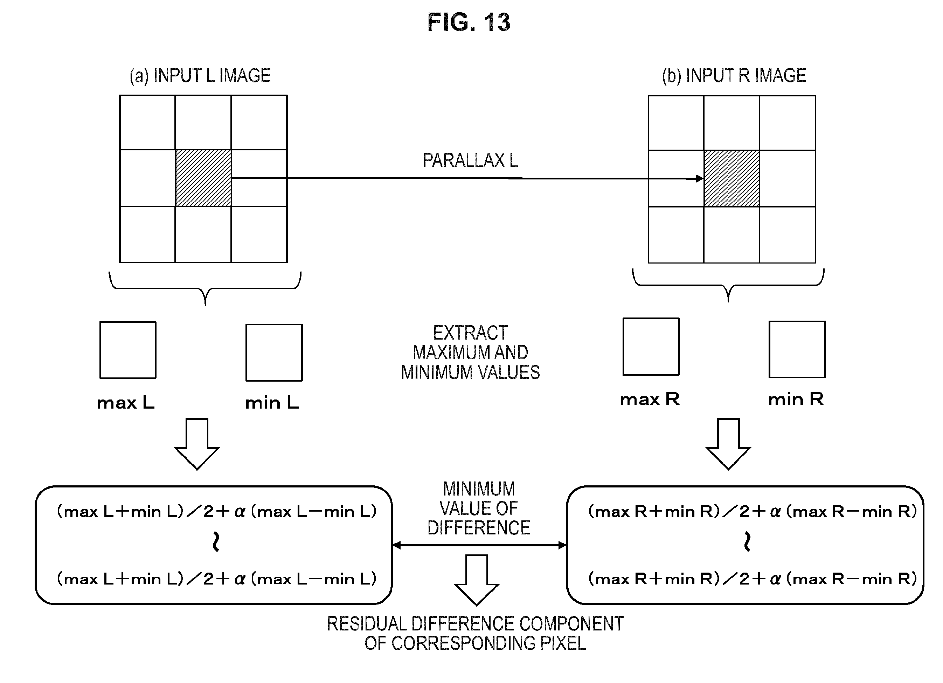

An example in which a dynamic range is acquired as a feature value of an image region and a process aspect is changed based on the value of the dynamic range will be described with reference to FIG. 13.

FIG. 13 shows two image regions input from the left perspective image (L image) input unit 101 and the right perspective image (R image) input unit 102, which are:

(a) an image region of an input L image having 3x3 pixels including a pixel of interest at the center; and
(b) an image region of an input R image having 3x3 pixels including a pixel of interest at the center.

The image regions are corresponding blocks extracted as corresponding pixel blocks through the parallax estimation process performed by the parallax estimation unit 103.

In other words, if the parallax estimation is correct, the two pixel blocks include photographed images of a same subject.

(a) The following pixel values are acquired from the nine pixels included in the image region of the input L image having 3x3 pixels including the pixel of interest at the center:

the pixel value of a pixel having a maximum pixel value (luminance value) (maxL); and
the pixel value of a pixel having a minimum pixel value (luminance value) (minL).

(b) In the same manner, the following pixel values are acquired from the nine pixels included in the image region of the input R image having 3x3 pixels including the pixel of interest at the center:

the pixel value of a pixel having a maximum pixel value (luminance value) (maxR); and

the pixel value of a pixel having a minimum pixel value (luminance value) (minR).

Furthermore, with regard to a residual difference component corresponding to the pixel of interest, a computed value (Lx) using the intermediate value of the pixel values of the pixel blocks of the L image and a dynamic range thereof and a computed value (Rx) using the intermediate value of the pixel values of the pixel bocks of the R image and a dynamic range thereof are computed as follows:

$$Lx=(maxL+minL)/2+\alpha(maxL-minL) \sim (maxL+minL)/2-\alpha(maxL-minL);$$

and

$$Rx=(maxR+minR)/2+\alpha(maxR-minR) \sim (maxR+minR)/2-\alpha(maxR-minR)$$

It should be noted that:

(maxL+minL)/2 corresponds to the intermediate value of the pixel values of the pixel blocks of the L image; and (maxL-minL) corresponds to the dynamic range of the pixel values of the pixel blocks of the L image.
(maxR+minR)/2 corresponds to the intermediate value of the pixel values of the pixel blocks of the R image; and (maxR-minR) corresponds to the dynamic range of the pixel values of the pixel blocks of the R image.
$\alpha$ is a coefficient.

Furthermore, the minimum value of the difference of Lx and Rx is computed, and the difference is set to be a residual difference component of the pixel of interest.
In this case, the minimum value of the difference of Lx and Rx changes according to the dynamic range of each pixel block.
As a result, the residual difference component computed according to the dynamic ranges in units of the pixel blocks is adaptively adjusted.
Using the dynamic ranges as the feature values of the image regions, a reliability can be computed according to the value of the dynamic range of each image region.

(4-2. Regarding a reliability computation process executed by the second reliability computation section)

Next, a reliability (R1) computation process example executed by the second reliability computation section 172 shown in FIG. 6 will be described.
The second reliability computation section 172 shown in FIG. 6 computes the reliability (R1) based on horizontally adjacent pixel differences of a parallax map. The parallax map is image data in which the parallax information generated by the parallax estimation unit 103 is expressed by luminance.

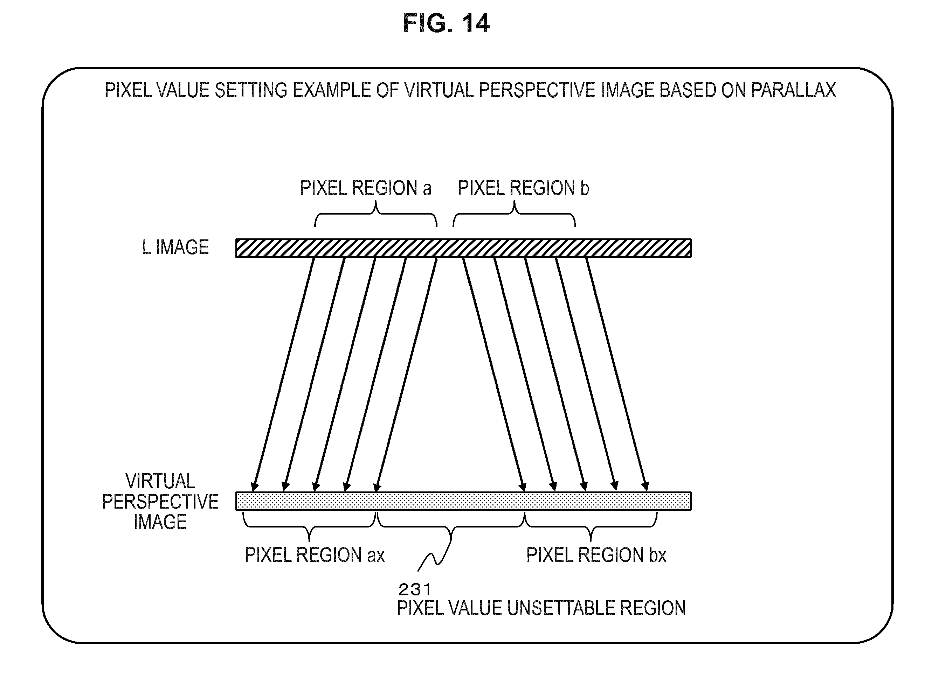

FIG. 14 shows a process example of generating a virtual perspective image. A case in which, for example, the pixel value of the virtual perspective image is set using the pixel value of an input L image and using the parallax information generated by the parallax estimation unit 103 is assumed.
The L image shown in FIG. 14 indicates one horizontal direction line of the L image, and the arrows correspond to the parallax information generated by the parallax estimation unit 103.
When different subjects at different distances are set in a pixel region a and a pixel region b of the L image:

the same pixel value as that of the region a of the L image is set in a region ax of the virtual perspective image according to the parallax information corresponding to the region a of the L image; and
similarly, the same pixel value as that of the region b of the L image is set in a region bx of the virtual perspective image according to the parallax information corresponding to the region b of the L image.

In this case, however, there is no pixel value in a region 231 of the virtual perspective image corresponding to either region of the L image which becomes a region in which it is not possible to set a pixel value, in other words, a pixel-value-unsettable region 231.
For such a pixel region, an interpolation process using another image, or pixel values of adjacent pixels of the generated virtual perspective image is necessary. However, there is a high possibility of the pixel region resultantly becoming an unnatural image.

In the reliability (R1) computation process executed by the second reliability computation section 172 shown in FIG. 6, a possibility of occurrence of such a pixel-value-unsettable region is computed in units of pixels, and the reliability R1 of the estimated parallax information is computed according to the possibility.

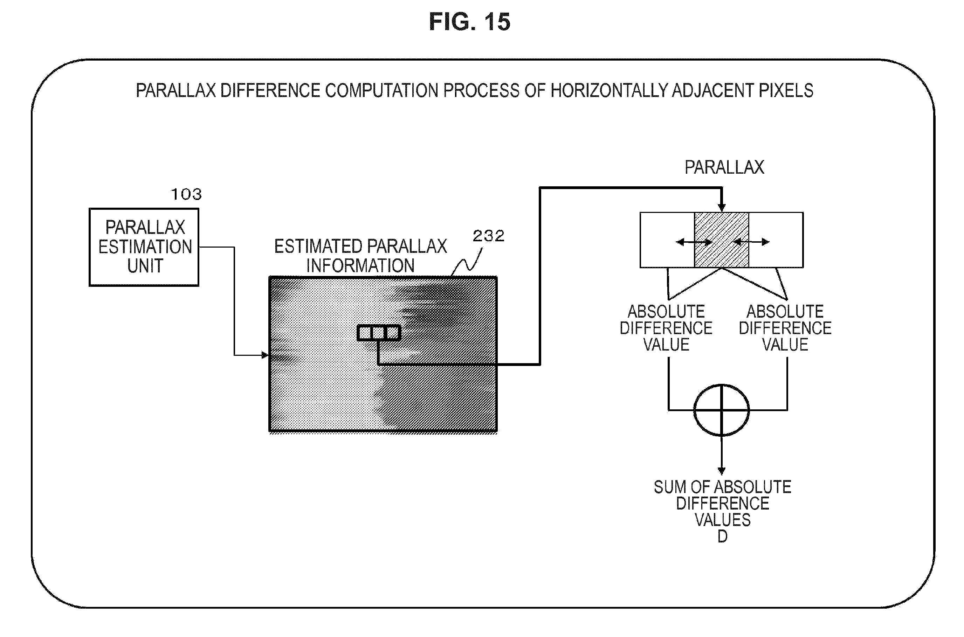

A specific reliability computation process example will be described with reference to FIG. 15.

The second reliability computation section 172 shown in FIG. 6 receives an input of the estimated parallax information 232 from the parallax estimation unit 103 shown in FIG. 1.

The estimated parallax information 232 shown in FIG. 15 expresses estimated parallax using grayscale (luminance) of pixels in units of the pixels.

In the parallax estimation information, three pixels in the horizontal direction including the pixel of interest at the center are sequentially selected. Furthermore, the following elements are computed:

the absolute difference value between the pixel value (luminance value) indicating parallax of the pixel of interest and the pixel value (luminance value) indicating parallax of the left-adjacent pixel; and

the absolute difference value between the pixel value (luminance value) indicating parallax of the pixel of interest and the pixel value (luminance value) indicating parallax of the right-adjacent pixel, and

the two absolute difference values are added, and thereby the sum of the absolute difference values (D) is computed.

Based on the sum of the absolute difference values D, the reliability R1 of the estimated parallax information generated by the parallax estimation unit 103 is decided.

In other words, when the sum of the absolute difference values D is large, the reliability R1 of the estimated parallax information generated by the parallax estimation unit 103 is low.

On the other hand, when the sum of the absolute difference values D is small, the reliability R1 of the estimated parallax information generated by the parallax estimation unit 103 is determined to be high.

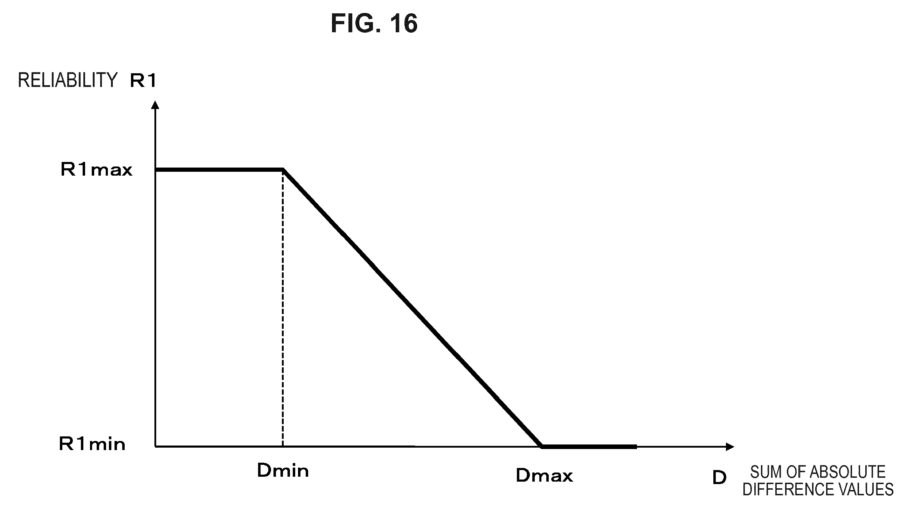

The correspondence relationship between the sum of the absolute difference values D and the reliability R1 of the estimated parallax information generated by the parallax estimation unit 103 is specifically defined as the correspondence relationship as shown in, for example, FIG. 16.

In other words, the second reliability computation section 172 computes the value of the reliability R1 of the estimated parallax information generated by the parallax estimation unit 103 according to the value of the sum of the absolute difference values D as follows:

$0 \leq D \leq Dmin$: Reliability R1=R1max;
$Dmin \leq D \leq Dmax$: Reliability R1=R1max~R1min; and
$Dmax \leq D$: Reliability R1=R1min.

It should be noted that, for the values of Dmin, Dmax, R1min, and R1max, values set in advance are used.

In addition, in the range of $Dmin \leq D \leq Dmax$, the reliability R1 rectilinearly changes between R1max and R1min.

(4-3. Regarding a reliability computation process executed by the third reliability computation section)

Next, a reliability (R2) computation process example executed by the third reliability computation section 173 shown in FIG. 6 will be described.

The third reliability computation section 173 shown in FIG. 6 computes the reliability (R2) based on vertically adjacent pixel differences of parallax of longitudinal edge portions.

The longitudinal edge portions, in other words, image regions in which edges are present in the longitudinal direction that is the vertical direction, are regions in which pixel values and luminance significantly change in the horizontal direction, and if an error of parallax estimation occurs in such a longitudinal edge portion, unnaturalness of an observed 3D image becomes more conspicuous.

Thus, when a virtual perspective image using the estimated parallax information generated by the parallax estimation unit 103 is generated, more correct estimated parallax information is obtained in the longitudinal edge portions of the image than in a lateral edge portion.

The third reliability computation section 173 computes the reliability (R2) according to the intensity of the longitudinal edge portions in units of image regions, considering the above circumstance.

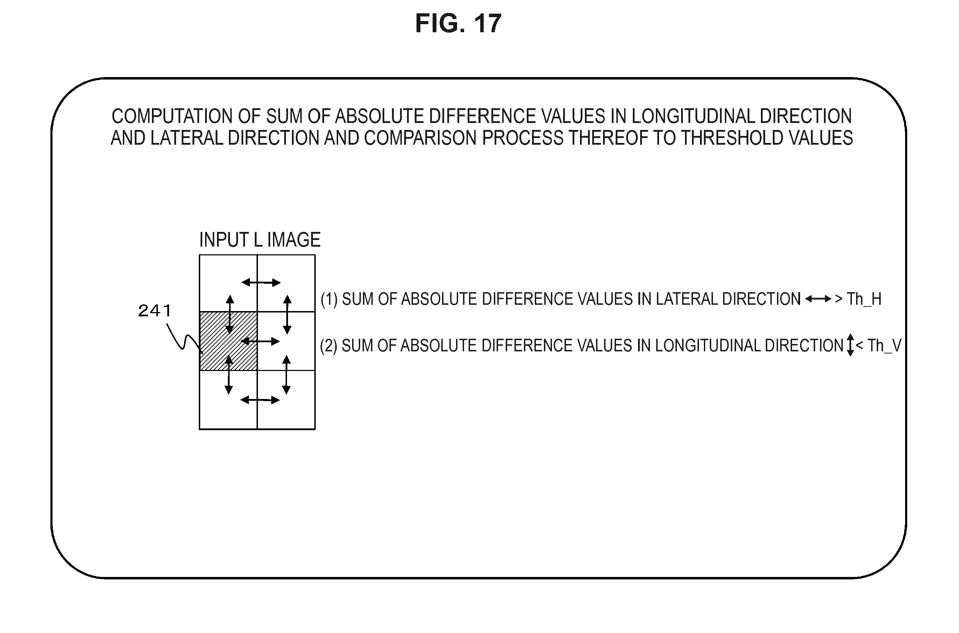

It should be noted that, in order to determine whether a portion is a longitudinal edge portion or not, for example, the method shown in FIG. 17 can be applied.

As shown in FIG. 17, a 2x3-pixel region of an input L image including a pixel of interest 241 is extracted from the L image, the absolute difference value of the pixel values (luminance values may be used) of the adjacent pixels is computed, and then the following elements are computed:

the sum of the absolute lateral-direction difference values obtained by adding a plurality of absolute difference values between the adjacent pixels in the lateral (horizontal direction); and

the sum of the absolute longitudinal-direction difference values obtained by adding a plurality of absolute difference values between the adjacent pixels in the longitudinal (vertical direction).

Furthermore, pre-set threshold values of Th_H and Th_V are compared. In other words, it is determined whether or not conditions (1) and (2) are both satisfied:

(1) the sum of the absolute difference values in the lateral direction>Th-H; and
(2) the sum of the absolute difference values in the longitudinal direction<Th_V.

When conditions (1) and (2) are both satisfied, the pixel of interest 241 is determined to be a longitudinal edge portion.

On the other hand, when any of the conditions (1) and (2) is not satisfied, the pixel of interest 241 can be determined to be a longitudinal edge portion.

The third reliability computation section 173 computes the reliability (R2) according to the intensity of a longitudinal edge.

It should be noted that, in the region of a longitudinal edge, a reliability of estimated parallax information generated by the parallax estimation unit 103 performed through a process of, for example, block matching or the like becomes high.

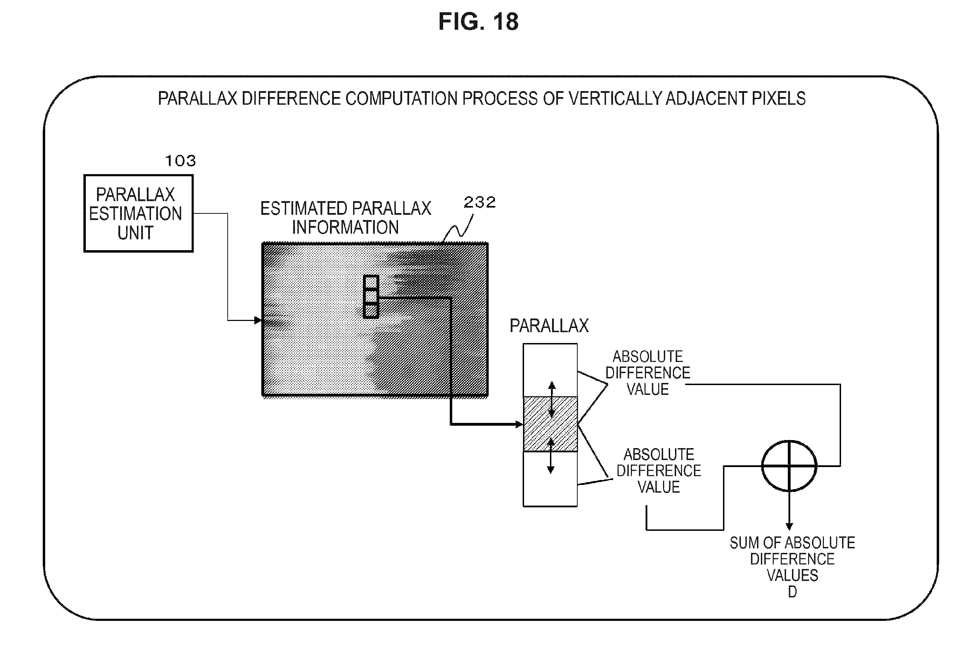

The reliability (R2) computation process executed by the third reliability computation section 173 according to the intensity of a longitudinal edge will be described with reference to FIG. 18.

As shown in FIG. 18, the third reliability computation section 173 receives an input of estimated parallax information 232 from the parallax estimation unit 103 shown in FIG. 1.

The estimated parallax information 232 shown in FIG. 18 expresses estimated parallax using grayscale (luminance) of pixels in units of the pixels.

In the parallax estimation information, three pixels in the vertical direction including the pixel of interest at the center are sequentially selected. Furthermore, the following elements are computed:

the absolute difference value between the pixel value (luminance value) indicating parallax of the pixel of interest and the pixel value (luminance value) indicating parallax of the upper-adjacent pixel; and

the absolute difference value between the pixel value (luminance value) indicating parallax of the pixel of interest and the pixel value (luminance value) indicating parallax of the lower-adjacent pixel, and

the two absolute difference values are added, thereby computing the sum of the absolute difference values (D).

Based on the sum of the absolute difference values D, the reliability R2 of the estimated parallax information generated by the parallax estimation unit 103 is decided.

When the sum of the absolute difference values D is large, there is a great difference in the pixel values (luminance) even in the longitudinal direction, and a tendency of longitudinal edges is low, and in such a case, the reliability R2 of the estimated parallax information generated by the parallax estimation unit 103 is set to be a low value.

On the other hand, when the sum of the absolute difference values D is small, there is a small difference in the pixel values (luminance) even in the longitudinal direction, and a tendency of longitudinal edges is high, and in such a case, the reliability R2 of the estimated parallax information generated by the parallax estimation unit 103 is determined to be high.

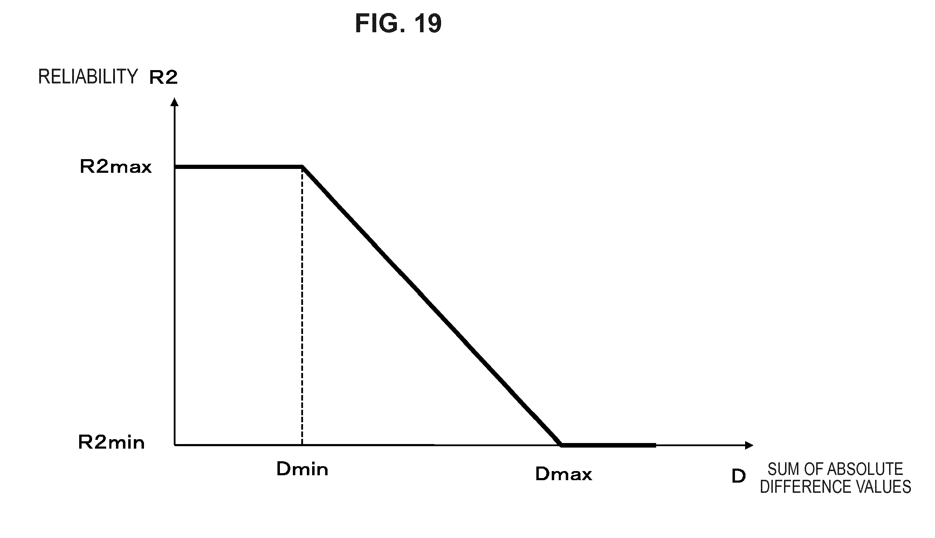

The correspondence relationship between the sum of the absolute difference values D and the reliability R2 of the estimated parallax information generated by the parallax estimation unit 103 is specifically defined as the correspondence relationship as shown in, for example, FIG. 19.

In other words, the third reliability computation section 173 computes the value of the reliability R2 of the estimated parallax information generated by the parallax estimation unit 103 according to the value of the sum of the absolute difference values D as follows:

$0 \leq D \leq Dmin$: Reliability R2=R2max;
$Dmin \leq D \leq Dmax$: Reliability R2=R2max~R2min; and
$Dmax \leq D$: Reliability R2=R2min.

It should be noted that, for the values of Dmin, Dmax, R2min, and R2max, values set in advance are used.

In addition, in the range of Dmin≤D≤Dmax, the reliability R2 rectilinearly changes between R2max and R2min.

(4-4. Regarding a reliability computation process executed by the fourth reliability computation section)

Next, a reliability (R3) computation process example executed by the fourth reliability computation section 174 shown in FIG. 6 will be described.

The fourth reliability computation section 174 shown in FIG. 6 computes the reliability (R3) based on the estimated parallax information generated by the parallax estimation unit 103 and a comparison of the upper limit value and the lower limit value of pre-set estimated parallax.

The parallax estimation unit 103 of the image processing device 100 shown in FIG. 1 first estimates parallax between the input L and R images by applying, for example, the block matching process or the like described with reference to FIG. 2.

For the sake of efficiency of the process, the parallax estimation process is performed by setting in advance a set range, in other words, a search range, of a block set in the R image with respect to one block set in the L image when, for example, block matching is performed.

Thus, when actually correct parallax exceeds the search range, the estimated parallax information generated by the parallax estimation unit 103 becomes the upper limit value or the lower limit value according to the predetermined search range.

When the upper limit value of the lower limit value is output as the estimated parallax information, the actual parallax is highly likely to be greater than the upper limit value or smaller than the lower limit value.

The fourth reliability computation section 174 shown in FIG. 6 computes the reliability (R3) of the estimated parallax information by extracting a pixel region for which such parallax of the upper limit value or the lower limit value is computed.

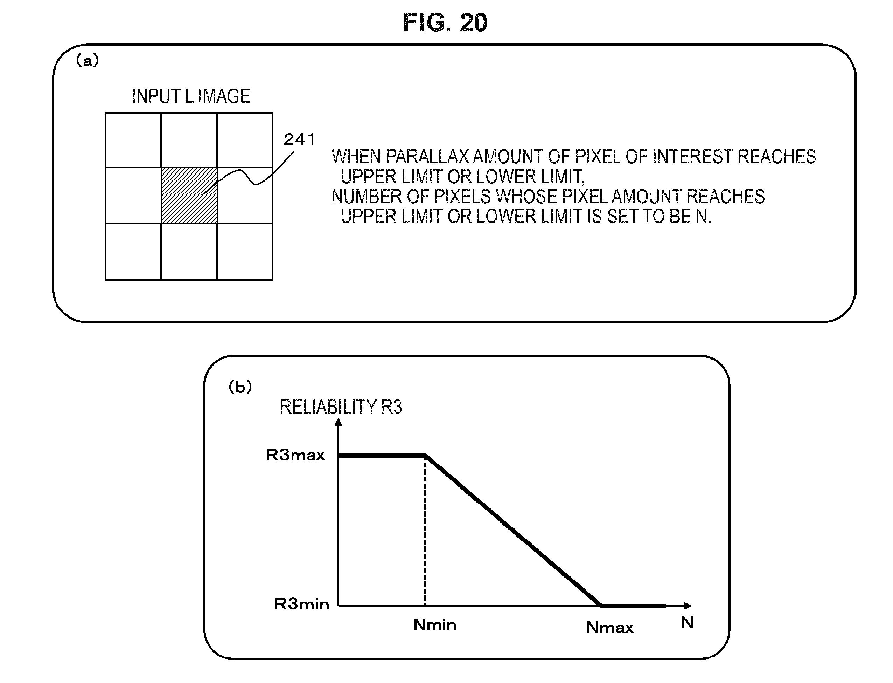

The process executed by the fourth reliability computation section 174 shown in FIG. 6 will be described with reference to FIG. 20.

The fourth reliability computation section 174 shown in FIG. 6 extracts a pixel region that includes the pixel of interest 241, for example, a 3x3 pixel region having the pixel of interest 241 as the center pixel from the L image input from the left perspective image (L image) input unit 101 as shown in FIG. 20(a), and then determines first whether or not the estimated parallax information generated by the parallax estimation unit 103 reaches the upper limit value or the lower limit value for the pixel of interest 241.

When the estimated parallax information corresponding to the pixel of interest 241 does not reach the upper limit value or the lower limit value, the reliability (R3) of the pixel of interest becomes the maximum value (R3max).

When the estimated parallax information corresponding to the pixel of interest 241 reaches the upper limit value or the lower limit value, the number of pixels (N) for which the estimated parallax information reaches the upper limit value or the lower limit value is counted for the nine pixels of the pixel region including the pixel of interest 241, for example, the 3x3 pixel region shown in FIG. 20(a).

The fourth reliability computation section 174 computes the reliability (R3) according to the count number (N).

Among the pixels included in the pixel region (3x3 pixels) including the pixel of interest of which the estimated parallax information reaches the upper limit value or the lower limit value, when the number of pixels (N) of which the estimated parallax information reaches the upper limit value or the lower limit value is large, actual parallax of the pixel of interest is determined to be highly likely to be greater than the upper limit value or smaller than the lower limit value, and the reliability R3 of the estimated parallax information generated by the parallax estimation unit 103 is set to be a low value.

On the other hand, among the pixels included in the pixel region (3x3 pixels) including the pixel of interest of which the estimated parallax information reaches the upper limit value or the lower limit value, when the number of pixels (N) of which the estimated parallax information reaches the upper limit value or the lower limit value is small, actual parallax of the pixel of interest is determined to be highly likely to be greater than the upper limit value or smaller than the lower limit value, and the reliability R3 of the estimated parallax information generated by the parallax estimation unit 103 is set to be a high value.

The correspondence relationship between the count number of pixels N and the reliability R3 of the estimated parallax information generated by the parallax estimation unit 103 is specifically defined as the correspondence relationship as shown in, for example, FIG. 20(b).

In other words, the fourth reliability computation section 174 computes the value of the reliability R3 of the estimated parallax information generated by the parallax estimation unit 103 according to the value of the number of pixels (N) of which the estimated parallax included in the pixel region (3x3 pixels) including the pixel of interest, of which the estimated parallax reaches the upper limit value or the lower limit value, reaches the upper limit value or the lower limit value as follows:

0≤N≤Nmin: Reliability R3=R3max;
Nmin≤N≤Nmax: Reliability R3=R3max~R3min; and
Nmax≤N: Reliability R3=R3min.

It should be noted that, for the values of Nmin, Nmax, R3min, and R3max, values set in advance are used.
In addition, in the range of Nmin≤N≤Nmax, the reliability R3 rectilinearly changes between R3max and R3min.

(4-5. Regarding a reliability computation process executed by the fifth reliability computation section)

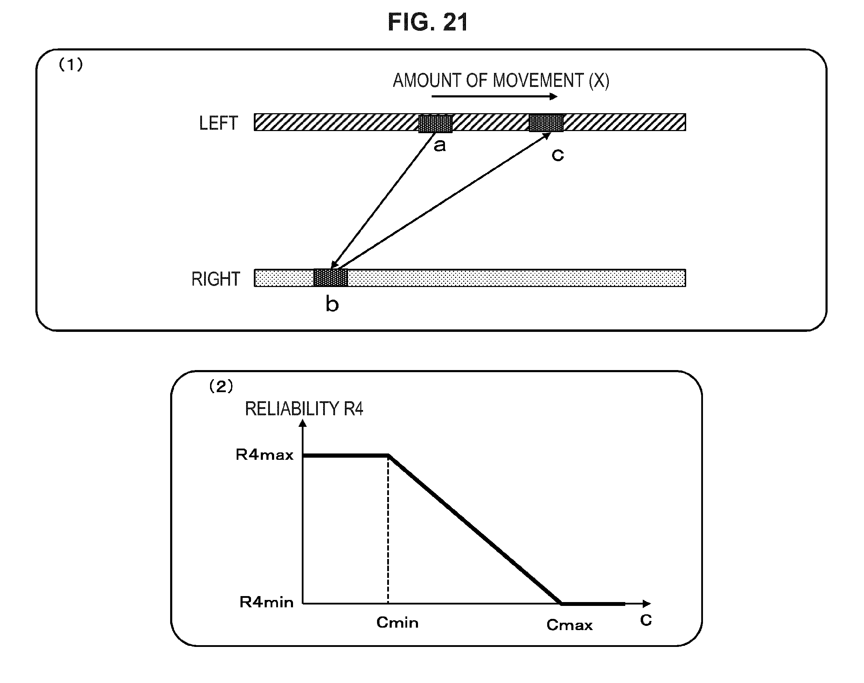

Next, a reliability (R4) computation process example executed by the fifth reliability computation section 175 shown in FIG. 6 will be described.
The fifth reliability computation section 175 shown in FIG. 6 computes a corresponding pixel position (b) of the R image to each pixel (a) of the L image based on the estimated parallax information generated by the parallax estimation unit 103 as shown in FIG. 21(1). Furthermore, the fifth reliability computation section computes a corresponding pixel position (c) of the L image by estimating parallax between the L image corresponding to the computed pixel position (b) of the R image.
If the estimated parallax is correct, (a)=(c) is satisfied. In other words, as shown in the drawing, the following is satisfied:

an amount of movement (X)=0.

However, when the estimated parallax information is incorrect, the following is satisfied:

an amount of movement (X)≠0.

The fifth reliability computation section 175 shown in FIG. 6 computes the reliability (R4) through such a process.
It should be noted that, as a premise of the process, the parallax estimation unit 103 is set to generate the following two kinds of estimated parallax information and provide the information to the fifth reliability computation section 175:

L image-based estimated parallax information based on detection information of a corresponding pixel position of the R image to the L image input from the left perspective image (L image) input unit 101; and
R image-based estimated parallax information based on detection information of a corresponding pixel position of the L image to the R image input from the right perspective image (R image) input unit 102.

The fifth reliability computation section 175 shown in FIG. 6, to be specific, sequentially executes the following processes.
(Process 1) With respect to the pixel of interest (a) of the L image input from the left perspective image (L image) input unit 101, the corresponding pixel position (b) in the R image input from the right perspective image (R image) input unit 102 is acquired based on the L image-based estimated parallax information generated by the parallax estimation unit 103.
(Process 2) With respect to the pixel (b) of the R image input from the right perspective image (R image) input unit 102, the corresponding pixel position (c) in the L image is acquired based on the R image-based estimated parallax information generated by the parallax estimation unit 103.
(Process 3) The distance between the pixel (a) and the pixel (c) in the L image (an amount of movement X) is acquired, and then compared to a prescribed threshold value (TH_X).
(Process 4) The processes 1 to 3 are performed on all pixels of the L image input from the left perspective image (L image) input unit 101, and then the number of pixels (C) satisfying the following determination formula is counted.
The amount of movement X≥TH_X
The fifth reliability computation section 175 shown in FIG. 6 computes the reliability (R4) of the estimated parallax information based on the number of pixels (C) satisfying the above-described determination formula.
When the number of pixels (C) satisfying the above-described determination formula is large, the reliability (R4) of the estimated parallax information generated by the parallax estimation unit 103 is set to be a low value.
On the other hand, when the number of pixels (C) satisfying the above-described determination formula is small, the reliability R4 of the estimated parallax information generated by the parallax estimation unit 103 is set to be a high value.
The correspondence relationship between the number of pixels C and the reliability R4 of the estimated parallax information generated by the parallax estimation unit 103 is specifically defined as the correspondence relationship as shown in, for example, FIG. 21(b).

In other words, the fifth reliability computation section 175 computes the value of the reliability R4 of the estimated parallax information generated by the parallax estimation unit 103 according to the value of the number of pixels (C) satisfying the following determination:

the amount of movement X≥TH_X

among all pixels of the L image input from the left perspective image (L image) input unit 101 as follows:

0≤C≤Cmin: Reliability R4=R4max;
Cmin≤C≤Cmax: Reliability R4=R4max~R4min; and
Cmax≤C: Reliability R4=R4min.

It should be noted that, for the values of Cmin, Cmax, R4min, and R4max, values set in advance are used.

In addition, in the range of Cmin≤C≤Cmax, the reliability R4 rectilinearly changes between R4max and R4min.

(4-6. Regarding the final reliability computation process by the reliability computation unit)

As described with reference to FIG. 6, the reliability computation unit 104 receives the following elements as shown in FIG. 6, which are:

the left perspective image (L image) from the left perspective image (L image) input unit 101;
the right left perspective image (R image) from the right perspective image (R image) input unit 102; and
the estimated parallax information from the parallax estimation unit 103,
and based on the input information, the first to fifth reliability computation sections 171 to 175 compute the plurality of reliabilities (R0 to R4) using the plurality of different processes as described above.

The arithmetic operation section 181 shown in FIG. 6 computes the final reliability information by applying the plurality of reliabilities (R0 to R4) and then outputs the reliability information to the virtual perspective image generation unit 105.

The arithmetic operation section 181 computes the weighted sum (R) using the following expression in which the pre-set weight coefficients of $\alpha 0$, $\alpha 1$, $\alpha 2$, $\alpha 3$, and $\alpha 4$ are applied to the reliabilities R0, R1, R2, R3, and R4 that are computed in the first to fifth reliability computation sections 171 to 175, and outputs the computed value to the virtual perspective image generation unit 105 as the final reliability information.

$$R=\alpha 0 \cdot R0 + \alpha 1 \cdot R1 + \alpha 2 \cdot R2 + \alpha 3 \cdot R3 + \alpha 4 \cdot R4$$

It should be noted that, although FIG. 6 shows the five kinds of reliability computation sections of the first to fifth reliability computation sections 171 to 175, a configuration in which one or more reliability computation sections, rather than all five of the sections, are used is possible. Alternatively, a configuration in which another reliability is applied is also possible.

[5. Regarding a process of the virtual perspective image generation unit]

Next, a specific process example of the virtual perspective image generation unit 105 shown in FIG. 1 will be described.

The virtual perspective image generation unit 105 generates virtual perspective images by receiving inputs of the following information including:

the L image from the left perspective image (L image) input unit 101;
the R image from the right perspective image (R image) input unit 102;
the parallax information from the parallax estimation unit 103; and
the reliability information from the reliability computation unit 104.

The virtual perspective image generation unit 105 executes the process of deciding the virtual perspective positions according to the reliability information input from the reliability computation unit 104, and then generates the virtual perspective images corresponding to the decided virtual perspective positions.

The virtual perspective image generation unit 105 adjusts parallax amounts, in other words, decides the virtual perspective positions (phases) to be generated according to the reliability information input from the reliability computation unit 104, and then generates the virtual perspective images corresponding to the decided virtual perspective positions (phases).

To be specific, the virtual perspective image generation unit 105 generates the virtual perspective images by setting, for example, parallax intervals of the generated virtual perspective images to be wide when the reliability input from the reliability computation unit 104 is high and setting the parallax intervals to be narrow when the reliability is low.

Hereinafter, examples of a plurality of specific configurations of the virtual perspective image generation unit 105 will be described in order.

(5-1. Configuration example of deciding a virtual perspective position according to reliability information input from the reliability computation unit)

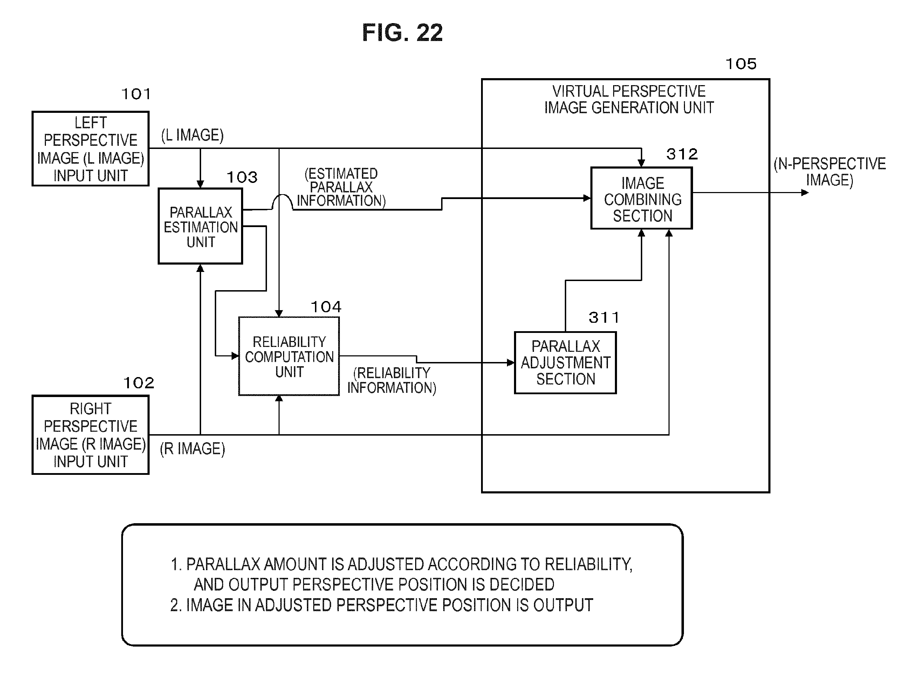

One example of the virtual perspective image generation unit 105 will be described with reference to FIG. 22.

As shown in FIG. 22, the virtual perspective image generation unit 105 of the present example has a parallax adjustment section 311 and an image combining section 312.

The parallax adjustment section 311 receives an input of the reliability information computed by the reliability computation unit 104, in other words, a reliability of the estimated parallax information generated by the parallax estimation unit 103.

The reliability is, for example, the value of the weighted addition of the plurality of pieces of different reliability information (R0 to R4) as described above. To be specific, the reliability R computed according to the following expression is input:

$$\text{reliability } R = \alpha 0 \cdot R0 + \alpha 1 \cdot R1 + \alpha 2 \cdot R2 + \alpha 3 \cdot R3 + \alpha 4 \cdot R4,$$

wherein, $\alpha 0$, $\alpha 1$, $\alpha 2$,... are pre-set weight coefficients.

The reliability R has a value from 0 to 1, and R=1 for the highest reliability and R=0 for the lowest reliability.

The parallax adjustment section 311 decides parallax of virtual perspective images that should be generated, i.e., the positions (phases) of the virtual perspective images to be generated according to the input reliability R.

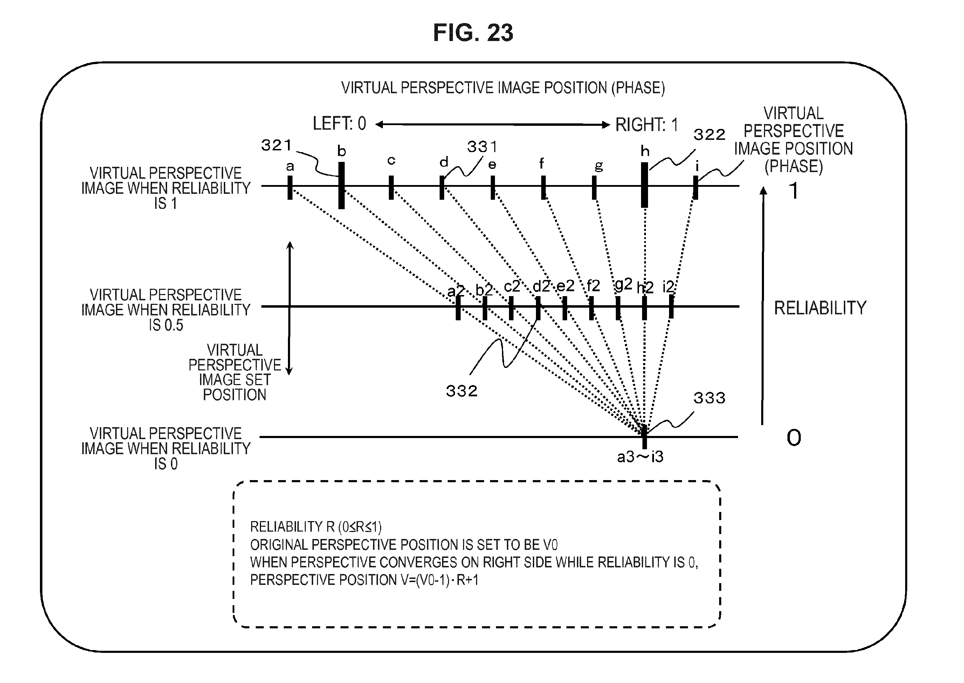

To be specific, according to the reliability R having a value from 0 to 1, the process of deciding the virtual perspective positions as shown in FIG. 23 is performed.

FIG. 23 is a diagram showing an example of setting the virtual perspective image positions in cases in which the reliability R=0 to 1.

The perspective position of 0 is a perspective position corresponding to the input L image; and the perspective position of 1 is a perspective position corresponding to the input R image.

In other words, on the line of the reliability=1,
an image b321 corresponds to the input L image input from the left perspective image (L image) input unit 101; and an image h322 corresponds to the input R image input from the right perspective image (R image) input unit 102.

Other longitudinal lines on the line of the reliability=1 indicate the positions (phases) of the virtual perspective images generated by the virtual perspective image generation unit 105 when information of the reliability R computed by the reliability computation unit 104 has a most reliable value, or R=1.

In this example, images having nine different perspectives from a to i including the input L and R images are set to be generated and output.

When the information of the reliability R computed by the reliability computation unit 104 satisfies the condition of R=1, the parallax adjustment section 311 decides the a to i images in the upper part of FIG. 23 as the set positions of the virtual perspective images, and outputs the information of the virtual perspective positions to the image combining section 312 shown in FIG. 22.

The image combining section 312 shown in FIG. 22 generates the virtual perspective images corresponding to the set positions by applying the input L image and the input R image based on the set position information of the virtual perspective images input from the parallax adjustment section 311.

It should be noted that the process of generating the virtual perspective images is performed according to the processes previously described with reference to FIGS. 3 and 4.

In addition, when the information of the reliability R computed by the reliability computation unit 104 satisfies R=0.5, in other words, is an intermediate reliability, the parallax adjustment section 311 decides a2 to i2 images in the middle part of FIG. 23 as the set positions of the virtual perspective images, and outputs information of the virtual perspective position to the image combining section 312 shown in FIG. 22.

The image combining section 312 shown in FIG. 22 generates the virtual perspective images corresponding to the set positions by applying the input L image and the input R image based on the information of the set position of the virtual perspective images input from the parallax adjustment section 311.

In the case of the middle-low reliability of 0.5, the parallax range of the virtual perspective images a2 to i2 is narrower than the parallax range of the virtual perspective images a to i in the case of the high reliability of reliability R=1 as understood from the drawing.

Furthermore, when the information of the reliability R computed by the reliability computation unit 104 satisfies R=0, in other words, is unreliable, the parallax adjustment section 311 decides an image 333 in the lower part of FIG. 23 as the set position of the virtual perspective image, and outputs the information of the virtual perspective position to the image combining section 312 shown in FIG. 22.

The image combining section 312 shown in FIG. 22 generates the virtual perspective image corresponding to the set position by applying the input L image and the input R image based on the information of the set position of the virtual perspective image input from the parallax adjustment section 311.

It should be noted that the image position of the image 333 in the lower part of FIG. 23 corresponds to the image position of the input R image. In other words, in this case, the input R image is output as it is without generating a new virtual perspective image.

It should be noted that, in this case, the virtual perspective image generation unit 105 also outputs the input L image as it is, and accordingly, only the input L and R images are output on the display unit.

The parallax adjustment section 311 executes the process of computing the set positions (phase) of the virtual perspective images according to the following algorithm.

It should be noted that the virtual perspective images generated in the case of the reliability R=1 are decided in advance.

The images are in the positions of a to i shown in FIG. 23.

Reliability information input from the reliability computation unit 104 is set to be R.

However, R=0 to 1.

A virtual perspective image position (phase) in the case of the reliability R=1 is set to be V0.

In this case, the virtual perspective image position (phase) V set according to the reliability R is computed based on the following expression.

$$V=(V0-1)\cdot R+1$$

The position (phase) of a virtual perspective image 331 shown in FIG. 23 is a virtual perspective image position to be output when the reliability R=1.

The virtual perspective image position (phase) V is set to be 0.3.

Using the value of V, virtual perspective image positions (phases) when the reliability R is 0 to 1 are computed using the above-described expression.

When the reliability=0.5, for example, the position (V) of a virtual perspective image position 332 (d2) shown in FIG. 23 can be computed based on the above-described expression using the position (phase) V of the virtual perspective image 331 of 0.3. In other words,

$$V=(V0-1)\cdot R+1$$
$$=(0.3-1)\cdot 0.5+1$$
$$=0.85.$$

For example, when the reliability=0, the position (V) of a virtual perspective image position 333 (d3) shown in FIG. 23 can be computed based on the above-described expression using the position (phase) V of the virtual perspective image 331 of 0.3. In other words,

$$V=(V0-1)\cdot R+1$$
$$=(0.3-1)\cdot 0+1$$
$$=1.$$

In this manner, the parallax adjustment section 311 receives the input of the information of the reliability R computed by the reliability computation unit 104, then decides the set positions of the virtual perspective images according to the value of the input information of the reliability R, and then outputs the virtual perspective position information to the image combining section 312 shown in FIG. 22.

The image combining section 312 shown in FIG. 22 generates the virtual perspective images corresponding to the set positions by applying the input L image and the input R image based on the set position information of the virtual perspective images input from the parallax adjustment section 311.

(5-2. Configuration example of deciding a virtual perspective position according to information on the correspondence relationship between a reliability and an optimum parallax amount and reliability information input from the reliability computation unit)

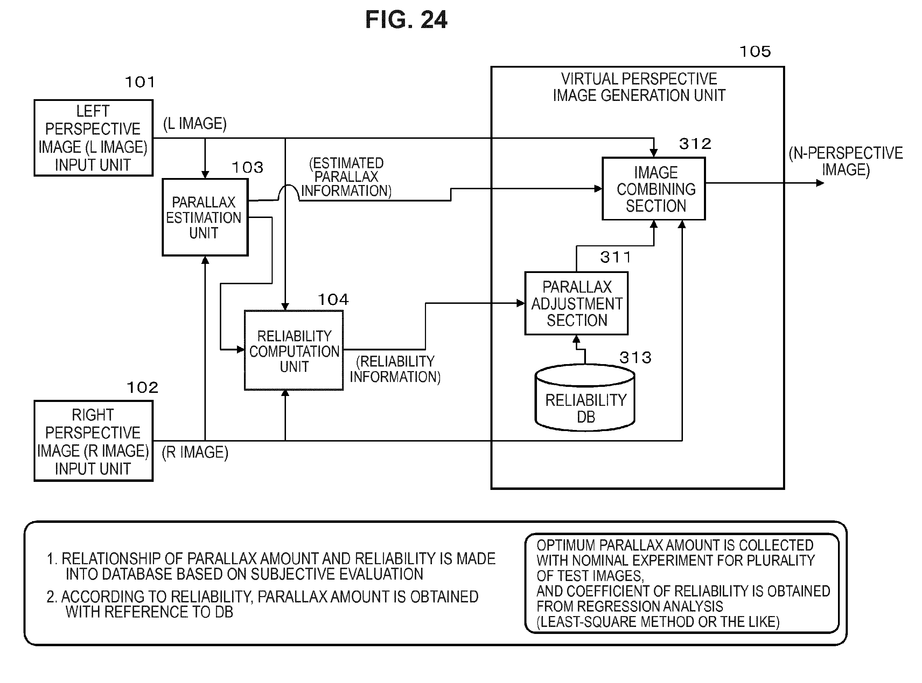

Next, an example of the virtual perspective image generation unit 105 that decides a virtual perspective position according to information on the correspondence relationship between a reliability and an optimum parallax amount and reliability information input from the reliability computation unit will be described with reference to FIG. 24.

As shown in FIG. 24, the virtual perspective image generation unit 105 of the present example has the parallax adjustment section 311 and the image combining section 312 as described with reference to FIG. 22, and further has a reliability database 313 in which the information on the correspondence relationship between a reliability and an optimum parallax amount is stored.

The parallax adjustment section 311 receives an input of the reliability information computed by the reliability computation unit 104, in other words, a reliability of the estimated parallax information generated by the parallax estimation unit 103.

The reliability is, for example, the value of the weighted addition of the plurality of pieces of different reliability information (R0 to R4) as described above. To be specific, the reliability R computed according to the following expression is input:

$$\text{reliability } R = \alpha 0 \cdot R0 + \alpha 1 \cdot R1 + \alpha 2 \cdot R2 + \alpha 3 \cdot R3 + \alpha 4 \cdot R4,$$

wherein, $\alpha 0$, $\alpha 1$, $\alpha 2$,... are pre-set weight coefficients.

The reliability R has a value from 0 to 1, and R=1 for the highest reliability and R=0 for the lowest reliability.

The parallax adjustment section 311 receives inputs of:

the reliability R computed by the reliability computation unit 104; and
the information on the correspondence relationship between the reliability and the optimum parallax amount from the reliability database 313.

The parallax adjustment section 311 computes an adjusted reliability based on the information, and decides parallax of a virtual perspective image to be generated, i.e., the position (phase) of the virtual perspective image to be generated based on the adjusted reliability.

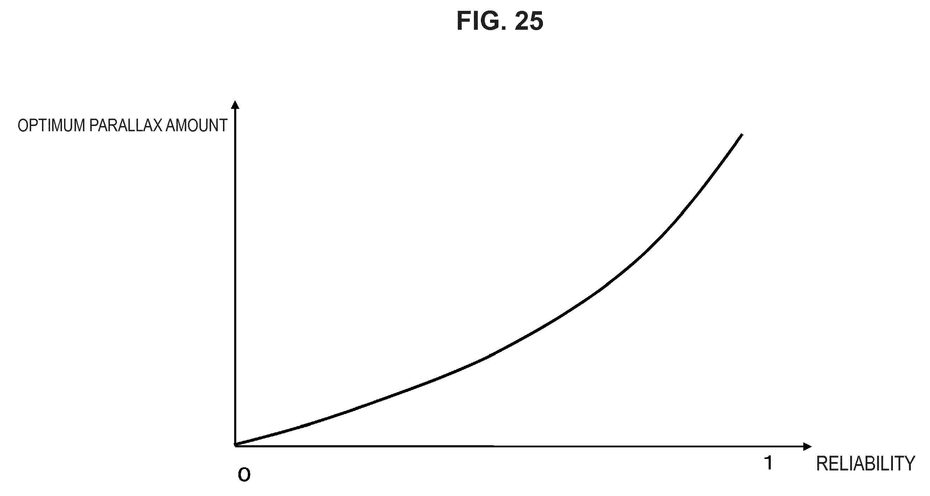

The reliability database 313 stores relationship data of the information of the correspondence relationship with the optimum parallax amount. The data is as shown in, for example, FIG. 25.

The data is data obtained in such a way that an observer observes learning data prepared in advance, for example, learning data having parallax of various reliabilities and parallax with which the observer can comfortably observe a 3D image is decided as the optimum parallax amount.

The parallax adjustment section 311 acquires the relationship data of the information of the correspondence relationship with the optimum parallax amount stored in the reliability database 313, and then computes a coefficient p corresponding to the reliability R computed by the reliability computation unit 104. The coefficient p is a multiplier of the reliability R, and a coefficient for computing an adjusted reliability pR for setting the optimum parallax amount. The coefficient p is obtained by applying a regression analysis process, for example, a least-square method.

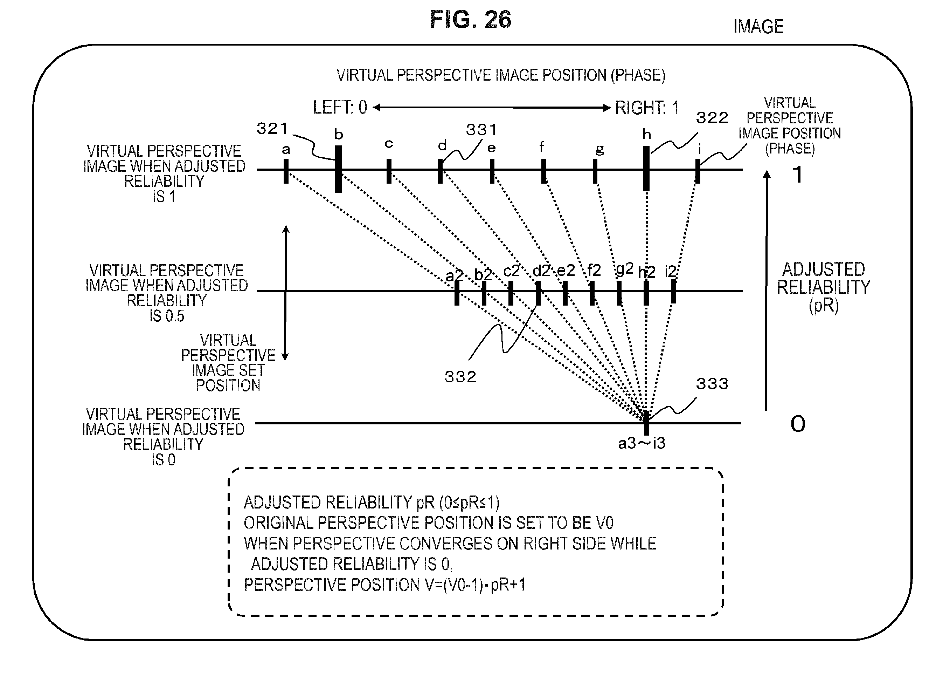

The parallax adjustment section 311 computes the adjusted reliability pR by multiplying the computed coefficient p by the reliability R computed by the reliability computation unit 104. According to the adjusted reliability pR, a process of deciding virtual perspective positions is performed as shown in FIG. 26.

FIG. 26 is a diagram showing an example of setting the virtual perspective image positions in cases in which the adjusted reliability pR is 0 to 1.

The perspective position of 0 is a perspective position corresponding to the input L image; and
the perspective position of 1 is a perspective position corresponding to the input R image.

In other words, on the line of the adjusted reliability=1,
the image b321 corresponds to the input L image input from the left perspective image (L image) input unit 101; and
the image h322 corresponds to the input R image input from the right perspective image (R image) input unit 102.

Other longitudinal lines on the line of the reliability=1 indicate the positions (phases) of the virtual perspective images generated by the virtual perspective image generation unit 105 when information of the adjusted reliability pR has a most reliable value, or pR=1.

In this example, the images having the nine different perspectives from a to i including the input L and R images are set to be generated and output.

When information of the adjusted reliability pR satisfies pP=1, the parallax adjustment section 311 decides the a to i images in the upper part of FIG. 23 as the set position of the virtual perspective images, and outputs the virtual perspective position information to the image combining section 312 shown in FIG. 24.

The image combining section 312 shown in FIG. 24 generates the virtual perspective images corresponding to the set positions by applying the input L image and the input R image based on the set position information of the virtual perspective images input from the parallax adjustment section 311.

It should be noted that the process of generating the virtual perspective images is performed according the processes previously described with reference to FIGS. 3 and 4.

In addition, when the information of the adjusted reliability pR satisfies pR=0.5, in other words, is an intermediate reliability, the parallax adjustment section 311 decides a2 to i2 images in the middle part of FIG. 26 as the set positions of the virtual perspective images, and outputs information of the virtual perspective position to the image combining section 312 shown in FIG. 24.

The image combining section 312 shown in FIG. 24 generates the virtual perspective images corresponding to the set positions by applying the input L image and the input R image based on the information of the set position of the virtual perspective images input from the parallax adjustment section 311.

In the case of the middle-low reliability of 0.5, the parallax range of the virtual perspective images a2 to i2 is narrower than the parallax range of the virtual perspective images a to i in the case of the high reliability of reliability R=1, as understood from the drawing.

Furthermore, when the information of the adjusted reliability pR satisfies pR=0, in other words, is unreliable, the parallax adjustment section 311 decides the image 333 in the lower part of FIG. 26 as the set position of the virtual perspective image, and outputs the information of the virtual perspective position to the image combining section 312 shown in FIG. 24.

The image combining section 312 shown in FIG. 24 generates the virtual perspective image corresponding to the set position by applying the input L image and the input R image based on the information of the set position of the virtual perspective image input from the parallax adjustment section 311.

It should be noted that the image position of the image 333 in the lower part of FIG. 26 corresponds to the image position of the input R image. In other words, in this case, the input R image is output as it is without generating a new virtual perspective image.

It should be noted that, in this case, the virtual perspective image generation unit 105 also outputs the input L image as it is, and accordingly, only the input L and R images are output on the display unit.

As described above, in the present example, the parallax adjustment section 311 receives inputs of the reliability R calculated by the reliability computation unit 104 and further the information of the correspondence relationship between the reliability and the optimum parallax amount from the reliability database 313.

The parallax adjustment section 311 computes the adjusted reliability based on the above information and decides parallax of the virtual perspective image that should be generated, i.e., the position (phase) of the virtual perspective image to be generated based on the adjusted reliability.

(5-3. Regarding an example in which parallax information conversion to which an LPF is applied and a process of converting a virtual perspective image are included)

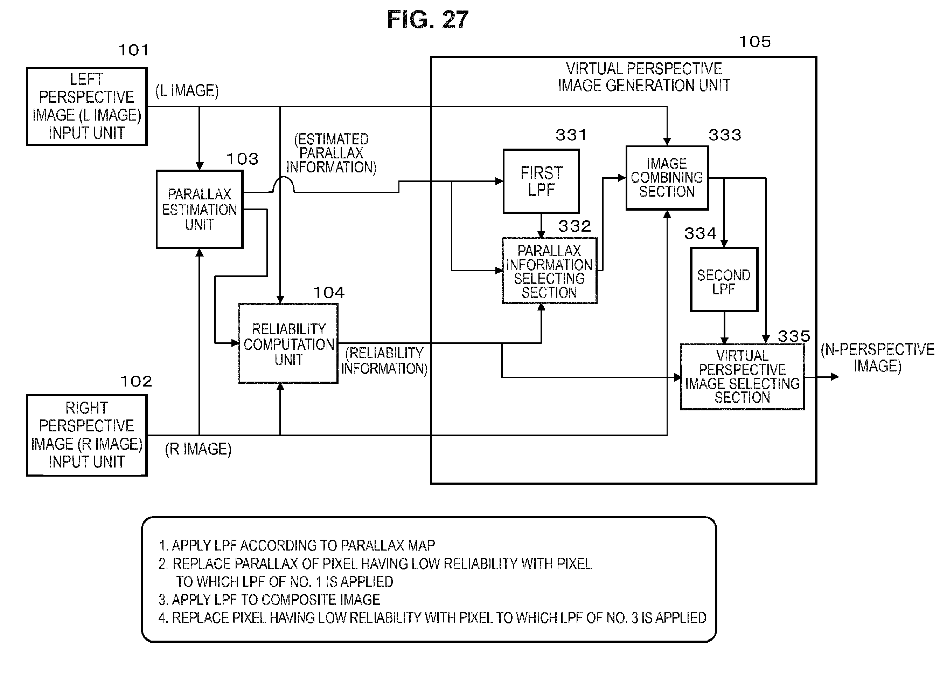

Next, an example of the virtual perspective image generation unit in which parallax information conversion to which an LPF (Low-Pass Filter) is applied and a process of converting a virtual perspective image are included will be described with reference to FIG. 27.

The virtual perspective image generation unit 105 shown in FIG. 27 has a first LPF (Low-Pass Filter) 331, a parallax information selecting section 332, an image combining section 333, a second LPF (Low-Pass Filter) 334, and a virtual perspective image selecting section 335.

The first LPF (Low-Pass Filter) 331 applies the LPF by receiving an input of estimated parallax information (parallax map) generated by the parallax estimation unit 103. With the application of the LPF, a radically changing portion of the parallax information is converted so as to gently change.

LPF-applied estimated parallax information generated by the first LPF (Low-Pass Filter) 331 is input to the parallax information selecting section 332.

The parallax information selecting section 332 receives inputs of the following information:

(a) the estimated parallax information (parallax map) generated by the parallax estimation unit 103;
(b) the LPF-applied estimated parallax information generated by the first LPF (Low-Pass Filter) 331; and
(c) the information of the reliability R computed by the reliability computation unit 104.

The parallax information selecting section 332 executes the following processes on the inputs of the above information.

With regard to a pixel with a high reliability in which (c) the information of the reliability R computed by the reliability computation unit 104 is equal to or higher than a pre-set threshold value, parallax information corresponding to a pixel included in (a) the estimated parallax information (parallax map) generated by the parallax estimation unit 103 is selected and output to the image combining section 333.

On the other hand, with regard to a pixel with a low reliability in which (c) the information of the reliability R computed by the reliability computation unit 104 is less than the pre-set threshold value, parallax information corresponding to a pixel included in (b) the LPF-applied estimated parallax information generated by the first LPF (Low-Pass Filter) 331 is selected and output to the image combining section 333.

The output information is input to the image combining section 333.

The image combining section 333 generates a virtual perspective image based on the parallax information.

The process of generating the virtual perspective image is executed using the input L and R images according to the processes previously described with reference to FIGS. 3 and 4.

The virtual perspective image generated by the image combining section 333 is input to the second LPF 334 and the virtual perspective image selecting section 335.

The second LPF 334 applies the LPF to the virtual perspective image generated by the image combining section 333. Through the LPF application process, a radically changing pixel value portion in the virtual perspective image is converted so as to gently change.

The LPF-applied virtual perspective image generated by the second LPF 334 is input to the virtual perspective image selecting section 335.

The virtual perspective image selecting section 335 receives inputs of the following information:

(d) the virtual perspective image generated by the image combining section 333;
(e) the LPF-applied virtual perspective image generated by the second LPF 334; and
(f) the information of the reliability R computed by the reliability computation unit 104.

The virtual perspective image selecting section 335 executes the following processes on the inputs of the above information.

With regard to a pixel with a high reliability in which (f) the information of the reliability R computed by the reliability computation unit 104 is equal to or higher than a pre-set threshold value, pixel information of (d) the virtual perspective image generated by the image combining section 333 is selected and output as a constituent pixel of the virtual perspective image to be output.

On the other hand, with regard to a pixel with a low reliability in which (f) the information of the reliability R computed by the reliability computation unit 104 is less than the pre-set threshold value, pixel information of (e) the LPF-applied virtual perspective image generated by the second LPF 334 is selected and output as a constituent pixel of the virtual perspective image to be output.

The virtual perspective image generation unit 105 shown in FIG. 27 executes conversion of the parallax information and conversion of the virtual perspective image by applying the LPF thereto as described above, thereby generating the virtual perspective image.

[6. Regarding an example in which resolution conversion is executed and parallax estimation is executed with application of a resolution-converted image]

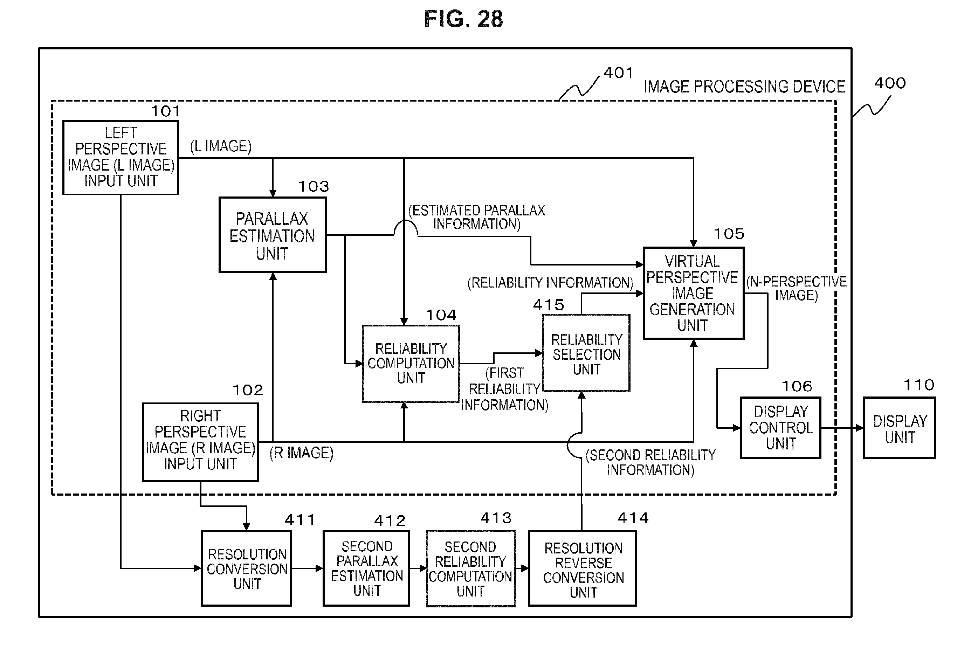

Next, an example in which resolution conversion is executed and parallax estimation is executed with application of a resolution-converted image will be described with reference to FIG. 28.

An image processing device 400 shown in FIG. 28 has the same configuration as the image processing device 100 shown in FIG. 1 except for a region 401 indicated by a dashed line and a reliability selection unit 415.

The image processing device 400 of the present example has a configuration including a resolution conversion unit 411, a second parallax estimation unit 412, a second reliability computation unit 413, a resolution reverse conversion unit 414, and a reliability selection unit 415 which are added to the configuration of the image processing device shown in FIG. 1.

The resolution conversion unit 411 executes resolution conversion of the L image input from the left perspective image (L image) input unit 101 and the R image input from the right perspective image (R image) input unit 102.

To be specific, images with low resolution are generated from the input L and R images.

The second parallax estimation unit 412 estimates parallax using the L and R images with low resolution generated by the resolution conversion unit 411. Estimated parallax information based on the images with low resolution is generated.

The estimated parallax information is input to the second reliability computation unit 413.

The second reliability computation unit 413 computes a reliability of the estimated parallax information generated by the second parallax estimation unit 412. The process of computing the reliability is executed as the same processes as previously described with reference to FIGS. 6 to 21. In other words, the plurality of different reliabilities (R0 to R5) are computed, weighted addition is performed using pre-set weights $\alpha 0$ to $\alpha 5$, and thereby a reliability is computed.

The reliability is set in units of pixels of the images with low resolution.

Information of the reliability is input to the resolution reverse conversion unit 414.

The resolution reverse conversion unit 414 executes a resolution conversion process that is reverse to the resolution conversion performed by the resolution conversion unit 411 on the information of the reliability corresponding to each pixel to perform a process of returning to the number of pixels of the original input images.

Second information of the reliability generated from the resolution reverse conversion process is input to the reliability selection unit 415.

A first parallax estimation unit 103 shown in the drawing executes the same processes as those described with reference to FIG. 1 and thereafter, thereby generating estimated parallax information based on the input L and R images.

A first reliability computation unit 104 also executes the same processes as those described with reference to FIG. 1 and thereafter, thereby computing a reliability corresponding to the estimated parallax information in units of pixels generated by the first parallax estimation unit 103. The computation is executed as the same processes as those previously described with reference to FIGS. 6 to 21. In other words, the plurality of different reliabilities (R0 to R5) are computed, weighted addition is performed using pre-set weights $\alpha 0$ to $\alpha 5$, and thereby the reliability is computed.

A first reliability computed by the first reliability computation unit 104 is input to the reliability selection unit 415.

The reliability selection unit 415 receives inputs of the following information;

> (a) information of the first reliability computed by the first reliability computation unit 104 corresponding to the input L and R image-based estimated parallax information; and
> (b) information of a second reliability computed by the second reliability computation unit 413 corresponding to the low resolution L and R image-based estimated parallax information,

in other words, the reliability selection unit 415 receives inputs of the two pieces of the reliability information corresponding to each pixel.

The reliability selection unit 415 selects the information of a higher reliability by comparing the two pieces of reliability information in units of pixels, and then outputs the information of the higher reliability as the information of the reliability of the pixels.

The information of the reliability selected in units of pixels is input to the virtual perspective image generation unit 105.

The virtual perspective image generation unit 105 executes the processes previously described with reference to FIGS. 22 to 27, thereby executing the process of generating a virtual perspective image with reference to the information of the reliability.

The virtual perspective image generated by the virtual perspective image generation unit 105 is output to and displayed on the display unit 110 via the display control unit 106.

As described above, in the configuration of the present example, the two pieces of the reliability information according to each pixel are generated by executing the following two processes;

parallax estimation and reliability information computation processes based on the images before the resolution conversion; and

parallax estimation and reliability information computation processes based on the low-resolution images obtained through conversion to low resolution.

Furthermore, among the two pieces of the reliability information, a piece of higher reliability information in units of pixels is used as the final reliability information.

With the process, an influence of an error in parallax estimation or the like caused by, for example, a local image error or the like can be reduced.

It should be noted that, as described above, a display image generated by the image processing device of the present disclosure is a display image of a glass-free 3D display device with which a user can view stereoscopic images without wearing glasses.

The display unit 110 is a display unit performing glass-free 3D display and a display unit that includes, for example, a lenticular sheet or a parallax barrier (parallax barrier) on the display face and enables control of images seen by the left and the right eye according to a viewing position.

The display control unit 106 outputs images having N perspectives generated by the virtual perspective image generation unit 105 to the display unit 110.

It should be noted that the display control unit 106 generates display information according to a display configuration of the display unit 110.

It should be noted that the image processing device can also be configured as, for example, an imaging device such as a camera, a PC, or a display device such as a television having an imaging unit, and is set to be configured to have a function according to each device when the image processing device is configured as one of the above devices.

A camera, for example, is configured to have an imaging unit that photographs L and R images as images from different perspectives and to generate multi-perspective images using the L and R images input from the imaging unit.

[7. Conclusion of the configuration of the present disclosure]

Hereinabove, the embodiment of the present disclosure has been described in detail with reference to specific examples. However, it is obvious that a person skilled in the art can modify or replace the examples within the scope not departing from the gist of the present disclosure. In other words, the present disclosure is disclosed in the form of exemplification, and should not be limitedly interpreted. When the gist of the present disclosure is determined, the claims should be considered.

Additionally, the present technology may also be configured as below.

(1) An image processing device including:

a left perspective image input unit configured to input a left perspective image (L image) that is an image signal for a left eye to be applied to three-dimensional image display;

a right perspective image input unit configured to input a right perspective image (R image) that is an image signal for a right eye to be applied to three-dimensional image display;

a parallax estimation unit configured to generate parallax information from the left perspective image (L image) and the right perspective image (R image);

a reliability computation unit configured to compute a reliability of the parallax information generated by the parallax estimation unit; and

a virtual perspective image generation unit configured to generate a virtual perspective image including an image of a perspective other than perspectives of the input L and R images by receiving inputs of the left perspective image (L image), the right perspective image (R image), the parallax information, and the reliability, wherein the virtual perspective image generation unit generates the virtual perspective image such that a parallax interval of the virtual perspective image to be generated is set to be wide when the reliability is high and set to be narrow when the reliability is low.

(2) The image processing device according to (1), wherein the reliability computation unit computes a plurality pieces of reliability information through a plurality of different reliability computation processes, and then computes a final reliability through weighted addition of the plurality of pieces of computed reliability information.

(3) The image processing device according to (1) or (2), wherein the reliability computation unit executes reliability computation according to an amount of a residual difference component obtained from computation of the difference between the input images and a parallax-compensated image generated from parallax compensation according to the parallax information estimated by the parallax estimation unit.

(4) The image processing device according to (3), wherein the reliability computation unit changes an aspect of the reliability computation according to a space activity in units of pixel regions of the left perspective image (L image) or the right perspective image (R image) in the reliability computation process according to the residual difference component.

(5) The image processing device according to (3), wherein the reliability computation unit changes an aspect of the reliability computation according to a dynamic range in units of pixel regions of the left perspective image (L image) or the right perspective image (R image) in the reliability computation process according to the residual difference component.

(6) The image processing device according to any one of (1) to (5), wherein the reliability computation unit executes reliability computation according to a parallax difference of horizontally adjacent pixels of the parallax information estimated by the parallax estimation unit.

(7) The image processing device according to any one of (1) to (6), wherein the reliability computation unit executes reliability computation according to a parallax difference of vertically adjacent pixels of the parallax information estimated by the parallax estimation unit.

(8) The image processing device according to any one of (1) to (7), wherein the reliability computation unit executes reliability computation according to whether or not the parallax information estimated by the parallax estimation unit reaches a pre-set upper limit value or lower limit value.

(9) The image processing device according to any one of (1) to (8), wherein the reliability computation unit executes reliability computation according to matching of the parallax information estimated by the parallax estimation unit based on the left perspective image (L image) input from the left perspective image (L image) input unit and the parallax information estimated by the parallax estimation unit based on the right perspective image (R image) input from the right perspective image (R image) input unit.

(10) The image processing device according to any one of (1) to (9), wherein the virtual perspective image generation unit has a parallax adjustment section configured to decide a parallax position of the virtual perspective image such that a parallax interval of the virtual perspective image to be generated is set to be wide when the reliability is high and set to be narrow when the reliability is low according to the reliability computed by the reliability computation unit, and an image combining section configured to generate the virtual perspective image according to the parallax position decided by the parallax adjustment section.

(11) The image processing device according to (10),
wherein the virtual perspective image generation unit has a reliability database in which correspondence information of the reliability and an optimum parallax amount is stored, and
wherein the parallax adjustment section acquires the optimum parallax amount according to the reliability input from the reliability computation unit by applying the correspondence information of the reliability and the optimum parallax amount stored in the reliability database, and then decides a virtual perspective image position according to the acquired parallax amount.

(12) The image processing device according to any one of (1) to (11), wherein, with regard to the following two pieces of parallax information (a) and (b):

> (a) the parallax information estimated by the parallax estimation unit; and
> (b) LPF-applied parallax information configured to be a result of application of a low-pass filter (LPF) to a parallax map configured to express the parallax information as an image,

the virtual perspective image generation unit further has a parallax information selection section configured to select the parallax information for a pixel with the high reliability and to select the LPF-applied parallax information for a pixel with the low reliability, and an image combining section configured to generate a virtual perspective image based on the parallax information selected by the parallax information selection section.

(13) The image processing device according to any one of (1) to (12), wherein, with regard to the following two virtual perspective images (a) and (b):

> (a) a virtual perspective image generated by the image combining section; and
> (b) a low-pass filter (LPF)-applied virtual perspective image configured to be a result of application of an LPF to the virtual perspective image generated by the image combining section,

the virtual perspective image generation unit further has a virtual perspective image selection section configured to select the virtual perspective image for a pixel with the high reliability and to select the LPF-applied virtual perspective image for a pixel with the low reliability.

(14) An image processing device including:

> a left perspective image input unit configured to input a left perspective image (L image) that is an image signal for a left eye to be applied to three-dimensional image display;
> a right perspective image input unit configured to input a right perspective image (R image) that is an image signal for a right eye to be applied to three-dimensional image display;
> a first parallax estimation unit configured to generate parallax information from the left perspective image (L image) and the right perspective image (R image);
> a first reliability computation unit configured to compute a first reliability of the parallax information generated by the first parallax estimation unit;
> a resolution conversion unit configured to perform resolution conversion of the left perspective image (L image) and the right perspective image (R image);
> a second parallax estimation unit configured to perform estimation of parallax information based on a left perspective image (L image) and a right perspective image (R image) with low resolution output from the resolution conversion unit;

a second reliability computation unit configured to compute a second reliability of second parallax information generated by the second parallax estimation unit;

a resolution reverse conversion unit configured to perform reverse conversion to the resolution conversion;

a reliability selection unit configured to select and output a higher reliability obtained by comparing the first reliability to the second reliability as a final reliability; and

a virtual perspective image generation unit configured to generate a virtual perspective image including an image of a perspective other than perspectives of the input L and R images by receiving inputs of the left perspective image (L image), the right perspective image (R image), the parallax information, and the final reliability,

wherein the virtual perspective image generation unit generates the virtual perspective image such that a parallax interval of the virtual perspective image to be generated is set to be wide when the final reliability is high and set to be narrow when the final reliability is low.

Furthermore, a method of the processes executed by the device or the like described above and a program that causes the processes to be executed are also included in the configuration of the present disclosure.

Furthermore, the processing sequence that is explained in the specification can be implemented by hardware, by software and by a configuration that combines hardware and software. In a case where the processing is implemented by software, it is possible to install in memory within a computer that is incorporated into dedicated hardware a program in which the processing sequence is encoded and to execute the program. It is also possible to install a program in a general-purpose computer that is capable of performing various types of processing and to execute the program. For example, the program can be installed in advance in a storage medium. In addition to being installed in a computer from the storage medium, the program can also be received through a network, such as a local area network (LAN) or the Internet, and can be installed in a storage medium such as a hard disk or the like that is built into the computer.

Note that the various types of processing that are described in this specification may not only be performed in a temporal sequence as has been described, but may also be performed in parallel or individually, in accordance with the processing capacity of the device that performs the processing or as needed. Furthermore, the system in this specification is not limited to being a configuration that logically aggregates a plurality of devices, all of which are contained within the same housing.

Industrial Applicability

As described hereinabove, according to the configuration of the embodiments of the present disclosure, a configuration in which optimum multi-perspective images according to a reliability of estimated parallax are generated based on L and R images as three-dimensional images is realized.

To be specific, a left perspective image (L image) and a right perspective image (R image) to be applied to three-dimensional image display are input, parallax information is generated based on the left perspective image (L image) and the right perspective image (R image), and then a reliability of the generated parallax information is computed. A plurality of different reliabilities are computed through, for example, a plurality of different analysis processes, and then the final reliability is computed through weighted addition of the plurality of computed reliabilities. A generation aspect of a virtual perspective image is changed according to the computed reliabilities. When a reliability is high, for example, a parallax interval of the virtual perspective image is set to be wide, and when the reliability is low, the parallax interval is set to be narrow.

With the process, an optimum multi-perspective image can be generated according to a reliability of estimated parallax.

Reference Signs List

100    image processing device
101    left perspective image (L image) input unit
102    right perspective image (R image) input unit
103    parallax estimation unit
104    reliability computation unit
105    virtual perspective image generation unit
106    display control unit

107     display unit
121     block
131     input L image
132     input R image
133     virtual perspective image
171     first reliability (R0) computation section
172     second reliability (R1) computation section
173     third reliability (R2) computation section
174     fourth reliability (R3) computation section
175     fifth reliability (R4) computation section
181     arithmetic operation section
201     input L image
202     estimated parallax information
203     parallax-compensated image
204     input R image
205     residual difference map
211     input L image
212     estimated parallax information
213
214     residual difference map
232     estimated parallax information
311     parallax adjustment section
312     image combining section
313     reliability database
331     first LPF
332     parallax information selecting section
333     image combining section
334     second LPF
335     virtual perspective image selecting section
411     resolution conversion unit
412     second parallax estimation unit
413     second reliability computation unit
414     resolution reverse conversion unit
415     reliability selection unit

**Claims**

1.  An image processing device comprising:

    a left perspective image input unit configured to input a left perspective image (L image) that is an image signal for a left eye to be applied to three-dimensional image display;
    a right perspective image input unit configured to input a right perspective image (R image) that is an image signal for a right eye to be applied to three-dimensional image display;
    a parallax estimation unit configured to generate parallax information from the left perspective image (L image) and the right perspective image (R image);
    a reliability computation unit configured to compute a reliability of the parallax information generated by the parallax estimation unit; and
    a virtual perspective image generation unit configured to generate a virtual perspective image including an image of a perspective other than perspectives of the input L and R images by receiving inputs of the left perspective image (L image), the right perspective image (R image), the parallax information, and the reliability, wherein the virtual perspective image generation unit generates the virtual perspective image such that a parallax interval of the virtual perspective image to be generated is set to be wide when the reliability is high and set to be narrow when the reliability is low.

2.  The image processing device according to claim 1, wherein the reliability computation unit computes a plurality pieces of reliability information through a plurality of different reliability computation processes, and then computes a final reliability through weighted addition of the plurality of pieces of computed reliability information.

**3.** The image processing device according to claim 1, wherein the reliability computation unit executes reliability computation according to an amount of a residual difference component obtained from computation of the difference between the input images and a parallax-compensated image generated from parallax compensation according to the parallax information estimated by the parallax estimation unit.

**4.** The image processing device according to claim 3, wherein the reliability computation unit changes an aspect of the reliability computation according to a space activity in units of pixel regions of the left perspective image (L image) or the right perspective image (R image) in the reliability computation process according to the residual difference component.

**5.** The image processing device according to claim 3, wherein the reliability computation unit changes an aspect of the reliability computation according to a dynamic range in units of pixel regions of the left perspective image (L image) or the right perspective image (R image) in the reliability computation process according to the residual difference component.

**6.** The image processing device according to claim 1, wherein the reliability computation unit executes reliability computation according to a parallax difference of horizontally adjacent pixels of the parallax information estimated by the parallax estimation unit.

**7.** The image processing device according to claim 1, wherein the reliability computation unit executes reliability computation according to a parallax difference of vertically adjacent pixels of the parallax information estimated by the parallax estimation unit.

**8.** The image processing device according to claim 1, wherein the reliability computation unit executes reliability computation according to whether or not the parallax information estimated by the parallax estimation unit reaches a pre-set upper limit value or lower limit value.

**9.** The image processing device according to claim 1, wherein the reliability computation unit executes reliability computation according to matching of the parallax information estimated by the parallax estimation unit based on the left perspective image (L image) input from the left perspective image (L image) input unit and the parallax information estimated by the parallax estimation unit based on the right perspective image (R image) input from the right perspective image (R image) input unit.

**10.** The image processing device according to claim 1, wherein the virtual perspective image generation unit has a parallax adjustment section configured to decide a parallax position of the virtual perspective image such that a parallax interval of the virtual perspective image to be generated is set to be wide when the reliability is high and set to be narrow when the reliability is low according to the reliability computed by the reliability computation unit, and an image combining section configured to generate the virtual perspective image according to the parallax position decided by the parallax adjustment section.

**11.** The image processing device according to claim 10,
wherein the virtual perspective image generation unit has a reliability database in which correspondence information of the reliability and an optimum parallax amount is stored, and
wherein the parallax adjustment section acquires the optimum parallax amount according to the reliability input from the reliability computation unit by applying the correspondence information of the reliability and the optimum parallax amount stored in the reliability database, and then decides a virtual perspective image position according to the acquired parallax amount.

**12.** The image processing device according to claim 1, wherein, with regard to the following two pieces of parallax information (a) and (b):

(a) the parallax information estimated by the parallax estimation unit; and
(b) LPF-applied parallax information configured to be a result of application of a low-pass filter (LPF) to a parallax map configured to express the parallax information as an image,

the virtual perspective image generation unit further has a parallax information selection section configured to select the parallax information for a pixel with the high reliability and to select the LPF-applied parallax information for a pixel with the low reliability, and an image combining section configured to generate a virtual perspective image based on the parallax information selected by the parallax information selection section.

**13.** The image processing device according to claim 1, wherein, with regard to the following two virtual perspective images (a) and (b):

(a) a virtual perspective image generated by the image combining section; and
(b) a low-pass filter (LPF)-applied virtual perspective image configured to be a result of application of an LPF to the virtual perspective image generated by the image combining section,

the virtual perspective image generation unit further has a virtual perspective image selection section configured to select the virtual perspective image for a pixel with the high reliability and to select the LPF-applied virtual perspective image for a pixel with the low reliability.

**14.** An image processing device comprising:

a left perspective image input unit configured to input a left perspective image (L image) that is an image signal for a left eye to be applied to three-dimensional image display;
a right perspective image input unit configured to input a right perspective image (R image) that is an image signal for a right eye to be applied to three-dimensional image display;
a first parallax estimation unit configured to generate parallax information from the left perspective image (L image) and the right perspective image (R image);
a first reliability computation unit configured to compute a first reliability of the parallax information generated by the first parallax estimation unit;
a resolution conversion unit configured to perform resolution conversion of the left perspective image (L image) and the right perspective image (R image);
a second parallax estimation unit configured to perform estimation of parallax information based on a left perspective image (L image) and a right perspective image (R image) with low resolution output from the resolution conversion unit;
a second reliability computation unit configured to compute a second reliability of second parallax information generated by the second parallax estimation unit;
a resolution reverse conversion unit configured to perform reverse conversion to the resolution conversion;
a reliability selection unit configured to select and output a higher reliability obtained by comparing the first reliability to the second reliability as a final reliability; and
a virtual perspective image generation unit configured to generate a virtual perspective image including an image of a perspective other than perspectives of the input L and R images by receiving inputs of the left perspective image (L image), the right perspective image (R image), the parallax information, and the final reliability,
wherein the virtual perspective image generation unit generates the virtual perspective image such that a parallax interval of the virtual perspective image to be generated is set to be wide when the final reliability is high and set to be narrow when the final reliability is low.

**15.** An image processing method executed in an image processing device, comprising:

inputting, through an image input unit, a left perspective image (L image) that is an image signal for a left eye and a right perspective image (R image) that is an image signal for a right eye to be applied to three-dimensional image display;
generating, by a parallax estimation unit, parallax information from the left perspective image (L image) and the right perspective image (R image);
computing, by a reliability computation unit, a reliability of the parallax information generated by the parallax estimation unit; and
executing, by a virtual perspective image generation unit, a virtual perspective image generation process for generating a virtual perspective image including an image of a perspective other than perspectives of the input L and R images by receiving inputs of the left perspective image (L image), the right perspective image (R image), the parallax information, and the reliability,
wherein the virtual perspective image generation unit generates the virtual perspective image such that a parallax interval of the virtual perspective image to be generated is set to be wide when the reliability is high and set to be narrow when the reliability is low.

16. A program for causing an image processing device to perform image processes including:

inputting a left perspective image (L image) that is an image signal for a left eye and a right perspective image (R image) that is an image signal for a right eye to be applied to three-dimensional image display through an image input unit;

generating parallax information from the left perspective image (L image) and the right perspective image (R image) in a parallax estimation unit;

computing a reliability of the parallax information generated by the parallax estimation unit in a reliability computation unit; and

causing a virtual perspective image generation process to be executed in a virtual perspective image generation unit, the virtual perspective image generation process including generating a virtual perspective image including an image of a perspective other than perspectives of the input L and R images by receiving inputs of the left perspective image (L image), the right perspective image (R image), the parallax information, and the reliability, wherein the virtual perspective image generation unit is caused to perform the process of generating the virtual perspective image such that a parallax interval of the virtual perspective image to be generated is set to be wide when the reliability is high and set to be narrow when the reliability is low.

## FIG. 1

# FIG. 2

(a) LEFT PERSPECTIVE IMAGE (L IMAGE)

(b) RIGHT PERSPECTIVE IMAGE (R IMAGE)

121 BLOCK

121 BLOCK

BLOCK POSITION WITH HIGH MATCHING RATE

CORRESPONDING PIXEL
IN R IMAGE TO PIXEL OF INTEREST
OF L IMAGE LP=(5, 3) IS RP=(7, 3)
AND PARALLAX d(x, y)=(7, 3)-(5, 3)=(2, 0),
IN OTHER WORDS, 2 PIXELS [pixel].

EP 2 744 207 A1

# FIG. 3

PERSPECTIVE
POSITION
(PHASE)

0.0
(=PERSPECTIVE
POSITION
OF INPUT L IMAGE)

0.3
(=PERSPECTIVE
POSITION
OF VIRTUAL
PERSPECTIVE IMAGE)

1.0
(=PERSPECTIVE
POSITION
OF INPUT R IMAGE)

131 (INPUT L IMAGE)

133 (VIRTUAL PERSPECTIVE IMAGE)

L1

132 (INPUT R IMAGE)

EP 2 744 207 A1

# FIG. 4

0
(=PERSPECTIVE POSITION OF INPUT L IMAGE)

$\Phi$
(=PERSPECTIVE POSITION OF VIRTUAL PERSPECTIVE IMAGE)

1
(= PERSPECTIVE POSITION OF INPUT R IMAGE)

PERSPECTIVE POSITION (PHASE)

0          $\Phi$          1

141          $\Phi \cdot d(x, y)$          143          $(1-\Phi) \cdot d(x, y)$          142

WHEN PARALLAX OF PIXEL P(x, y) OF LEFT PERSPECTIVE IMAGE (L IMAGE) IS d(x, y) [pixel], PIXEL Q(x+$\Phi \cdot$ d(x, y), y) OF VIRTUAL PERSPECTIVE IMAGE IS P(x, y). PIXELS NOT INCLUDED ARE INTERPOLATED WITH ADJACENT PIXELS, OR PIXELS OF LEFT PERSPECTIVE IMAGE IN SAME COORDINATES

EP 2 744 207 A1

## FIG. 5

LEFT PERSPECTIVE IMAGE (L IMAGE) — 151

OUTPUT PERSPECTIVE (VIRTUAL PERSPECTIVE) — 153

RIGHT PERSPECTIVE IMAGE (R IMAGE) — 152

PERSPECTIVE POSITION (PHASE)

0.0 (=PERSPECTIVE POSITION OF INPUT L IMAGE)

1.0 (=PERSPECTIVE POSITION OF INPUT R IMAGE)

1. PIXEL POSITION CORRESPONDING TO OUTPUT PERSPECTIVE POSITION IS OBTAINED FOR EACH PIXEL OF LEFT PERSPECTIVE IMAGE (L IMAGE), AND PIXEL VALUE OF LEFT PERSPECTIVE IMAGE (L IMAGE) IS INTERPOLATED IN PIXEL POSITION.

2. PIXEL POSITION CORRESPONDING TO OUTPUT PERSPECTIVE POSITION IS OBTAINED FOR EACH PIXEL OF RIGHT PERSPECTIVE IMAGE (R IMAGE), AND PIXEL VALUE OF RIGHT PERSPECTIVE IMAGE (R IMAGE) IS INTERPOLATED IN PIXEL POSITION.

3. PIXEL OF OUTPUT PERSPECTIVE IMAGE NOT INTERPOLATED IN ABOVE-DESCRIBED 1 AND 2 PROCESSES UNDERGOES INTERPOLATION PROCESS BASED ON ADJACENT PIXEL.

EP 2 744 207 A1

## FIG. 6

**104 RELIABILITY COMPUTATION UNIT**

**101 LEFT PERSPECTIVE IMAGE (L IMAGE) INPUT UNIT** — (L IMAGE) →

**171 FIRST RELIABILITY (R0) COMPUTATION SECTION**
RELIABILITY (R0) COMPUTATION SECTION BASED ON RESIDUAL DIFFERENCE COMPONENT OF PARALLAX COMPENSATION

**103 PARALLAX ESTIMATION UNIT** — (ESTIMATED PARALLAX INFORMATION) →

**172 SECOND RELIABILITY (R1) COMPUTATION SECTION**
RELIABILITY (R1) COMPUTATION SECTION BASED ON HORIZONTALLY ADJACENT PIXEL COMPONENT OF PARALLAX MAP

**173 THIRD RELIABILITY (R2) COMPUTATION SECTION**
RELIABILITY (R2) COMPUTATION SECTION BASED ON VERTICALLY ADJACENT PIXEL COMPONENT OF LONGITUDINAL EDGE PORTION

**102 RIGHT PERSPECTIVE IMAGE (R IMAGE) INPUT UNIT** — (R IMAGE) →

**174 FOURTH RELIABILITY (R3) COMPUTATION SECTION**
RELIABILITY (R3) COMPUTATION SECTION BASED ON COMPARISON OF ESTIMATED PARALLAX AMOUNT AND UPPER LIMIT VALUE

**175 FIFTH RELIABILITY (R5) COMPUTATION SECTION**
RELIABILITY (R4) COMPUTATION SECTION BASED ON MATCHING OF IMAGE GENERATED BASED ON PARALLAX AND L AND R IMAGES

**181 ARITHMETIC OPERATION SECTION** — (RELIABILITY INFORMATION) →

**105 VIRTUAL PERSPECTIVE IMAGE GENERATION UNIT**

EP 2 744 207 A1

# FIG. 7

0
(=PERSPECTIVE
POSITION OF
INPUT L IMAGE)

1
(=PERSPECTIVE
POSITION OF
INPUT R IMAGE)

PERSPECTIVE
POSITION
(PHASE)

0

1

201
INPUT L IMAGE

ESTIMATED PARALLAX
INFORMATION 202

PARALLAX-
COMPENSATED
IMAGE 203

103
PARALLAX
ESTIMATION
UNIT

204
INPUT R IMAGE

205

score ← Count(pixels>Th) ←

RESIDUAL DIFFERENCE MAP

# FIG. 8

RELIABILITY  R0

R0max

R0min

Nmin                    Nmax

N   COUNT NUMBER

# FIG. 9

PERSPECTIVE POSITION (PHASE)

0 (=PERSPECTIVE POSITION OF INPUT L IMAGE)

1 (=PERSPECTIVE POSITION OF INPUT R IMAGE)

211 — INPUT L IMAGE

212 — ESTIMATED PARALLAX INFORMATION

213 — INPUT R IMAGE

103 — PARALLAX ESTIMATION UNIT

214 — RESIDUAL DIFFERENCE MAP

RESIDUAL COMPONENT (D)

EP 2 744 207 A1

# FIG. 10

EP 2 744 207 A1

# FIG. 11

RESIDUAL DIFFERENCE
COMPONENT

THRESHOLD
VALUE
(Th)

FLAT REGION ←-------------------------------------→ TEXTURE REGION
EDGE REGION

SPACE ACTIVITY
COMPUTATION
PROCESS EXAMPLE

SUM OF ABSOLUTE
DIFFERENCE VALUES
OF ADJACENT PIXELS

SPACE ACTIVITY

EP 2 744 207 A1

**FIG. 12**

SPACE ACTIVITY COMPUTATION PROCESS EXAMPLE

SUM OF ABSOLUTE DIFFERENCE VALUES OF ADJACENT PIXELS

SPACE ACTIVITY

Nmax
Dmax

Nmin
Dmin

RESIDUAL DIFFERENCE COMPONENT

TEXTURE REGION
EDGE REGION

FLAT REGION

# FIG. 13

(a) INPUT L IMAGE

PARALLAX L

(b) INPUT R IMAGE

EXTRACT
MAXIMUM AND
MINIMUM VALUES

max L    min L

max R    min R

$$(\text{max L} + \text{min L}) / 2 + \alpha\,(\text{max L} - \text{min L})$$
$$\wr$$
$$(\text{max L} + \text{min L}) / 2 + \alpha\,(\text{max L} - \text{min L})$$

MINIMUM
VALUE OF
DIFFERENCE

$$(\text{max R} + \text{min R}) / 2 + \alpha\,(\text{max R} - \text{min R})$$
$$\wr$$
$$(\text{max R} + \text{min R}) / 2 + \alpha\,(\text{max R} - \text{min R})$$

RESIDUAL DIFFERENCE COMPONENT
OF CORRESPONDING PIXEL

EP 2 744 207 A1

## FIG. 14

PIXEL VALUE SETTING EXAMPLE OF VIRTUAL PERSPECTIVE IMAGE BASED ON PARALLAX

PIXEL REGION a   PIXEL REGION b

L IMAGE

VIRTUAL PERSPECTIVE IMAGE

PIXEL REGION ax   PIXEL REGION bx

231
PIXEL VALUE UNSETTABLE REGION

# FIG. 15

PARALLAX DIFFERENCE COMPUTATION PROCESS OF HORIZONTALLY ADJACENT PIXELS

103
PARALLAX ESTIMATION UNIT

ESTIMATED PARALLAX INFORMATION  232

PARALLAX

ABSOLUTE DIFFERENCE VALUE    ABSOLUTE DIFFERENCE VALUE

SUM OF ABSOLUTE DIFFERENCE VALUES D

EP 2 744 207 A1

# FIG. 16

RELIABILITY  R1

R1max

R1min

Dmin

Dmax

D  SUM OF ABSOLUTE
DIFFERENCE VALUES

EP 2 744 207 A1

# FIG. 17

COMPUTATION OF SUM OF ABSOLUTE DIFFERENCE VALUES IN LONGITUDINAL DIRECTION
AND LATERAL DIRECTION AND COMPARISON PROCESS THEREOF TO THRESHOLD VALUES

INPUT L IMAGE

241

(1) SUM OF ABSOLUTE DIFFERENCE VALUES IN LATERAL DIRECTION $\longleftrightarrow$ > Th_H

(2) SUM OF ABSOLUTE DIFFERENCE VALUES IN LONGITUDINAL DIRECTION $\updownarrow$ < Th_V

EP 2 744 207 A1

## FIG. 18

PARALLAX DIFFERENCE COMPUTATION PROCESS OF VERTICALLY ADJACENT PIXELS

103

PARALLAX
ESTIMATION
UNIT

ESTIMATED PARALLAX
INFORMATION
232

PARALLAX

ABSOLUTE
DIFFERENCE
VALUE

ABSOLUTE
DIFFERENCE
VALUE

SUM OF ABSOLUTE
DIFFERENCE
VALUES
D

EP 2 744 207 A1

FIG. 19

# FIG. 20

(a)

INPUT L IMAGE

241

WHEN PARALLAX AMOUNT OF PIXEL OF INTEREST REACHES
UPPER LIMIT OR LOWER LIMIT,
NUMBER OF PIXELS WHOSE PIXEL AMOUNT REACHES
UPPER LIMIT OR LOWER LIMIT IS SET TO BE N.

(b)

RELIABILITY R3

R3max

R3min

Nmin       Nmax       N

# FIG. 21

(1)

AMOUNT OF MOVEMENT (X)

LEFT

a

c

RIGHT

b

EP 2 744 207 A1

(2)

RELIABILITY R4

R4max

R4min

Cmin    Cmax    C

# FIG. 22

EP 2 744 207 A1

# FIG. 23

VIRTUAL PERSPECTIVE IMAGE POSITION (PHASE)

LEFT: 0 ←——————→ RIGHT: 1

VIRTUAL PERSPECTIVE IMAGE POSITION (PHASE)

VIRTUAL PERSPECTIVE IMAGE WHEN RELIABILITY IS 1

321  a  b  c  d  e  f  g  h  i  322  331

VIRTUAL PERSPECTIVE IMAGE WHEN RELIABILITY IS 0.5

VIRTUAL PERSPECTIVE IMAGE SET POSITION

a2 b2 c2 d2 e2 f2 g2 h2 i2

332

VIRTUAL PERSPECTIVE IMAGE WHEN RELIABILITY IS 0

333

a3～i3

RELIABILITY

1

0

RELIABILITY R ($0 \leq R \leq 1$)
ORIGINAL PERSPECTIVE POSITION IS SET TO BE V0
WHEN PERSPECTIVE CONVERGES ON RIGHT SIDE WHILE RELIABILITY IS 0,
PERSPECTIVE POSITION $V = (V0-1) \cdot R + 1$

EP 2 744 207 A1

57

# FIG. 24

1. RELATIONSHIP OF PARALLAX AMOUNT AND RELIABILITY IS MADE INTO DATABASE BASED ON SUBJECTIVE EVALUATION
2. ACCORDING TO RELIABILITY, PARALLAX AMOUNT IS OBTAINED WITH REFERENCE TO DB

OPTIMUM PARALLAX AMOUNT IS COLLECTED WITH NOMINAL EXPERIMENT FOR PLURALITY OF TEST IMAGES, AND COEFFICIENT OF RELIABILITY IS OBTAINED FROM REGRESSION ANALYSIS (LEAST-SQUARE METHOD OR THE LIKE)

EP 2 744 207 A1

**FIG. 25**

FIG. 26

# FIG. 27

LEFT PERSPECTIVE IMAGE (L IMAGE) INPUT UNIT    101

(L IMAGE)

PARALLAX ESTIMATION UNIT    103

(ESTIMATED PARALLAX INFORMATION)

RELIABILITY COMPUTATION UNIT    104

(RELIABILITY INFORMATION)

RIGHT PERSPECTIVE IMAGE (R IMAGE) INPUT UNIT    102

(R IMAGE)

VIRTUAL PERSPECTIVE IMAGE GENERATION UNIT    105

FIRST LPF    331

PARALLAX INFORMATION SELECTING SECTION    332

IMAGE COMBINING SECTION    333

SECOND LPF    334

VIRTUAL PERSPECTIVE IMAGE SELECTING SECTION    335

(N-PERSPECTIVE IMAGE)

1. APPLY LPF ACCORDING TO PARALLAX MAP
2. REPLACE PARALLAX OF PIXEL HAVING LOW RELIABILITY WITH PIXEL TO WHICH LPF OF NO. 1 IS APPLIED
3. APPLY LPF TO COMPOSITE IMAGE
4. REPLACE PIXEL HAVING LOW RELIABILITY WITH PIXEL TO WHICH LPF OF NO. 3 IS APPLIED

EP 2 744 207 A1

## FIG. 28

EP 2 744 207 A1

## INTERNATIONAL SEARCH REPORT

| | International application No. |
|---|---|
| | PCT/JP2012/073423 |

**A. CLASSIFICATION OF SUBJECT MATTER**
*H04N13/04*(2006.01)i

According to International Patent Classification (IPC) or to both national classification and IPC

**B. FIELDS SEARCHED**

Minimum documentation searched (classification system followed by classification symbols)
H04N13/04

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-32840 A (Matsushita Electric Industrial Co., Ltd.), 03 February 1998 (03.02.1998), paragraphs [0086] to [0125], [0135]; fig. 16 to 22 & US 6163337 A | 1-16 |
| A | JP 10-191396 A (Matsushita Electric Industrial Co., Ltd.), 21 July 1998 (21.07.1998), paragraphs [0009] to [0031]; fig. 1 to 4 & US 6163337 A | 1-16 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 October, 2012 (17.10.12) | 30 October, 2012 (30.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/073423

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-63067 A  (Fujifilm Corp.),<br>18 March 2010 (18.03.2010),<br>paragraphs [0024] to [0041]; fig. 1 to 5<br>& US 2010/0060719 A1    & EP 2161940 A2<br>& KR 10-2010-0029713 A | 1-16 |
| A | JP 2008-263528 A  (Nagoya University),<br>30 October 2008 (30.10.2008),<br>paragraphs [0031] to [0045]; fig. 16 to 21<br>(Family: none) | 1-16 |

Form PCT/ISA/210 (continuation of second sheet) (July 2009)

**REFERENCES CITED IN THE DESCRIPTION**

**Patent documents cited in the description**

- JP 2006115198 A

- JP 2006126965 A